# EUROPÄISCHE PATENTANMELDUNG

(11) **EP 4 300 384 A1**
(43) Veröffentlichungstag der Anmeldung: **03.01.2024**
(21) Anmeldenummer: 23177506.5
(22) Anmeldetag: 06.06.2023
(51) Int. Cl.: G06Q 10/02, G06Q 50/30

(54) **HINTERGRUNDSYSTEM FÜR EIN PERSONENTRANSPORTSYSTEM**

(30) Priorität: 30.06.2022 DE 102022116347
(71) Anmelder: Scheidt & Bachmann GmbH, 41238 Mönchengladbach (DE)
(72) Erfinder: Oelert, Dipl. Ing. Kai, 69190 Walldorf (DE); Kassovic, Ing. Marian, 81104 Bratislava (SI)
(74) Vertreter: Cohausz & Florack

(57) **Zusammenfassung**

Die Anmeldung betrifft ein Hintergrundsystem (102) für ein Personentransportsystem (100), umfassend mindestens einen Datenspeicher (124), eingerichtet zum Speichern mindestens eines Nutzerdatensatzes, enthaltend zumindest eine zur Durchführung einer Transportfahrt berechtigende elektronische Mediumkennung und mindestens eine mit der elektronischen Mediumkennung verknüpfte erste Transportnutzungsbedingung mindestens ein Empfangsmodul (134), eingerichtet zum Empfangen eines von einer Schnittstellenvorrichtung (104, 106, 110, 112, 204, 306) des Personentransportsystems (100) generierten Änderungsdatensatzes, enthaltend mindestens eine zweite Transportnutzungsbedingung, mindestens ein erstes Zeitdatum und mindestens eine Nutzerkennung zum Identifizieren eines gespeicherten Nutzerdatensatzes, mindestens ein Änderungsmodul (126), eingerichtet zum Ändern der Verknüpfung zwischen der in dem identifizierten Nutzerdatensatz gespeicherten elektronischen Mediumkennung und der ersten Transportnutzungsbedingung für mindestens eine zukünftige Transportfahrt, basierend auf der empfangenen zweiten Transportnutzungsbedingung, mindestens ein Fahrtrekonstruktionsmodul (128), eingerichtet zum Rekonstruieren einer durchgeführten Transportfahrt, zumindest basierend auf einem von einer Entwertervorrichtung (104, 106, 204, 306) des Personentransportsystem (100) empfangenen Check-In Datensatz, enthaltend zumindest eine elektronische Mediumkennung, und einem bereitgestellten Check-Out Datensatz, enthaltend zumindest dieselbe elektronische Mediumkennung, und mindestens ein Generierungsmodul (130), eingerichtet zum Generieren eines Abrechnungsdatensatzes, zumindest basierend auf der rekonstruierten Transportfahrt und der mit der elektronischen Mediumkennung verknüpften Transportnutzungsbedingung des Nutzerdatensatzes.

## Beschreibung

Die Anmeldung betrifft ein Hintergrundsystem für ein Personentransportsystem. Darüber hinaus betrifft die Anmeldung eine Schnittstellenvorrichtung, eine Durchgangssperre, ein Personentransportsystem und ein Verfahren zum Betreiben eines Hintergrundsystems.

Ein Personentransportsystem, insbesondere ein öffentliches Personentransportsystem, dient dem Transport von Personen bzw. Nutzern mittels Personentransportfahrzeugen (nachfolgend als Transportfahrzeuge bezeichnet). Beispielhafte und nicht abschließende Transportfahrzeuge sind Schienenfahrzeuge (z.B. Bahn, U-Bahn, Straßenbahn etc.), Kraftfahrzeuge (z.B. Bus), aber auch Wasserfahrzeuge und Flugzeuge. Eine Fahrt eines Nutzers mit einem Transportfahrzeug von einem Fahrtstartpunkt zu einem Fahrtendpunkt wird vorliegend mit einer Transportfahrt bezeichnet.

Für eine berechtigte bzw. zulässige Inanspruchnahme einer Transportfahrt bzw. einer entsprechenden Transportdienstleitung ist in der Regel ein Ticketmedium erforderlich. Das Ticketmedium kann allgemein anzeigen, dass der Nutzer zur Durchführung der Transportfahrt berechtigt ist. Bei Personentransportsystemen des Stands der Technik können als Ticketmedien beispielweise Papiertickets eingesetzt werden, die vor dem Fahrtantritt an einem Fahrkartenautomaten oder dergleichen zu erwerben sind.

Bekannt ist auch, dass in Ticketmedien technisch auslesebare Daten gespeichert sind, die Angaben über die Gültigkeit des jeweiligen Ticketmedium für die Durchführung einer Transportfahrt umfassen. Grundsätzlich sind aus dem Stand der Technik auch Personentransportsysteme bekannt, die proprietäre Ticketmedien (auch als "closed loop"-Ticketsysteme bezeichnet) und/oder offene Ticketmedien (entsprechende Systeme werden auch als "open loop"-Systeme bezeichnet) verwenden. Auch hybride Personentransportsysteme, bei denen beide Arten von Ticketmedien verwendet werden können, sind bekannt.

Der Vorteil von Personentransportsystemen mit einer offenen Architektur bzw. offenen Ticketmedien gegenüber Personentransportsystemen mit einer geschlossenen Architektur bzw. (ausschließlich) proprietären Ticketmedien liegt insbesondere darin, dass diese im Vergleich flexibler sind.

Nutzer bzw. Fahrgäste können bei der Nutzung eines Transportfahrzeugs für eine Transportfahrt unterschiedliche Ticketmedien als Nutzeridentifikationselemente nutzen, wie Tokens, Chipkarten (bzw. Smartcards), Kreditkarten, Bankkarten (oder dergleichen), Mobiltelefone, Personal Digital Assistants (PDAs), Tablet-PCs, integrierte Schaltungschips, elektronische Pässe, elektronische Ausweisdokumente etc. Insbesondere kann eine in dem Ticketmedium gespeicherte und auslesbare elektronische Mediumkennung für eine Authentifikation des Nutzers und beispielsweise einer anschließenden Abrechnung der durchgeführten Transportfahrt genutzt werden.

Es versteht sich, dass der Betreiber eines Personentransportsystems vorgeben kann, welche Nutzeridentifikationselemente tatsächlich verwendet werden dürfen und welche ausgeschlossen sind.

Ein Personentransportsystem mit einer offenen Architektur bzw. mit offenen Ticketmedien umfasst in der Regel eine Mehrzahl von Schnittstellenvorrichtungen insbesondere in Form von Entwertervorrichtungen. Eine Entwertervorrichtung (auch als Validatorvorrichtung bezeichnet) kann insbesondere in einem (Transport- )Haltestellenbereich (z.B. Haltestelle, Bahnhof etc.) und/oder in einem Transportfahrzeug angeordnet sein.

Eine Entwertervorrichtung ist vorliegend insbesondere eingerichtet zum Entwerten eines Ticketmediums durch ein Erfassen der in einem Speichermittel eines Ticketmediums gespeicherten elektronischen Mediumkennung.

Für eine ordnungsgemäße bzw. berechtigte Nutzung eines Transportfahrzeugs kann sich ein Nutzer beispielsweise bei einem Betreten des Transportfahrzeugs oder eines Haltestellenbereichs mittels des mobilen bzw. tragbaren Ticketmediums bei einer in oder vor dem Transportfahrzeug angeordneten Entwertervorrichtung anmelden (ein Anmelden kann auch als "check-in" bezeichnet werden). Bei einem Verlassen des Transportfahrzeugs kann ein Nutzer sich in entsprechender Weise abmelden (ein Abmelden kann auch als "check-out" bezeichnet werden).

Für ein Entwerten des Ticketmediums kann eine vorliegende Entwertervorrichtung über mindestens ein Erfassungsmodul verfügen, beispielsweise in Form einer Nahbereichsschnittstelle, die eingerichtet ist, die in dem Ticketmedium gespeicherte elektronische Mediumkennung aus dem Nutzeridentifikationselement auszulesen bzw. zu erfassen. Die erfasste elektronische Mediumkennung kann zum Identifizieren eines Nutzers und zum Beispiel zum Abrechnen der Nutzung des Transportfahrzeugs für die zurückgelegte Strecke zwischen Ein- und Ausstieg herangezogen werden.

Für jede erfasste elektronische Mediumkennung kann durch die Entwertervorrichtung ein Entwerterdatensatz, beispielsweise als Check-In-Datensatz oder als Check-Out Datensatz, generiert bzw. angelegt werden. Ein Check-In-Datensatz oder Check-Out Datensatz kann zumindest die erfasste elektronische Mediumkennung und den Erfassungszeitpunkt der elektronischen Mediumkennung enthalten. Ein entsprechender Datensatz kann zumindest teilweise kryptografisch verschlüsselt sein. In bevorzugter Weise kann ein entsprechender Datensatz gemäß den Sicherheitsrichtlinien der Finanzwirtschaft zumindest teilweise verschlüsselt sein, da er typischerweise Kartendaten von Kreditkarten oder Bankkarten enthält. In bevorzugter Weise kann ein entsprechender Datensatz zumindest teilweise gehasht sein.

Eine Entwertervorrichtung kann ein Sendemodul aufweisen zum Senden des Check-In-Datensatzes und/oder Check-Out Datensatzes an ein entfernt von der Entwertervorrichtung angeordnetes Hintergrundsystem (auch "back-office" genannt). Das Hintergrundsystem kann in Form von einem oder mehreren Server(n) gebildet sein. Das Hintergrundsystem kann eine Nutzungsabrechnung durchführen bzw. einen Abrechnungsdatensatz generieren, basierend auf einem Check-In Datensatz, enthaltend zumindest die elektronische Mediumkennung, und einem bereitgestellten Check-Out Datensatz, enthaltend zumindest diese Mediumkennung.

Nachteilig bei den bekannten Personentransportsystemen mit offenen Ticketmedien ist, dass das Erfassen einer elektronischen Mediumkennung bzw. das Entwerten des Ticketmediums mit einer festen (ersten) Transportnutzungsbedingung verknüpft ist. Diese feste Transportnutzungsbedingung gibt insbesondere einen Gültigkeitsumfang einer einzelnen durch eine Schnittstellenvorrichtung erfassten elektronischen Mediumkennung an. Die feste Transportnutzungsbedingung ist in der Regel eine Transportnutzungsbedingung, bei der als Gültigkeitsumfang eine einzelne Transportfahrt für einen erwachsenen Nutzer festgelegt ist.

Wenn der Nutzer jedoch einen anderen Gültigkeitsumfang benötigt, um beispielsweise eine weitere Person, die über kein Ticketmedium verfügt, und/oder einen zusätzlichen Gegenstand (kostenpflichtig) mitzunehmen, wie ein Fahrrad, ist es weiterhin erforderlich, in herkömmlicher Weise an einem Fahrkartenautomaten ein entsprechendes zusätzliches Papierticket zu erwerben. Dies führt nicht nur zu einer Reduktion des Nutzerkomforts, sondern erfordert weiterhin das Vorhalten von herkömmlicher Infrastruktur für einen Erwerb, eine Ausgabe und eine Entwertung herkömmlicher Papiertickets. Nicht nur muss diese Infrastruktur vorgehalten werden, sondern sie muss auch gewartet werden, und die Ressourcen müssen (beispielsweise das Papier für die Tickets) bereitgestellt werden.

Daher liegt der Anmeldung die Aufgabe zugrunde, bei einem Personentransportsystem mit offenen Ticketmedien eine Möglichkeit zu schaffen, den Nutzerkomfort zu erhöhen und den infrastrukturellen Aufwand des Personentransportsystems zu reduzieren.

Die Aufgabe wird gemäß einem ersten Aspekt der Anmeldung gelöst durch ein Hintergrundsystem für ein Personentransportsystem nach Anspruch 1. Das Hintergrundsystem umfasst mindestens einen Datenspeicher. Der Datenspeicher ist zumindest eingerichtet zum Speichern mindestens eines Nutzerdatensatzes, enthaltend zumindest eine zur Durchführung einer Transportfahrt berechtigende elektronische Mediumkennung und mindestens eine mit der elektronischen Mediumkennung verknüpfte erste Transportnutzungsbedingung. Das Hintergrundsystem umfasst mindestens ein Empfangsmodul. Das Empfangsmodul ist eingerichtet zum Empfangen eines von einer Schnittstellenvorrichtung des Personentransportsystems generierten Änderungsdatensatzes, enthaltend mindestens eine zweite Transportnutzungsbedingung, mindestens ein erstes Zeitdatum und mindestens eine Nutzerkennung zum Identifizieren eines gespeicherten Nutzerdatensatzes. Das Hintergrundsystem umfasst mindestens ein Änderungsmodul. Das Änderungsmodul ist eingerichtet zum Ändern der Verknüpfung zwischen der in dem identifizierten Nutzerdatensatz gespeicherten elektronischen Mediumkennung und der ersten Transportnutzungsbedingung für mindestens eine (nach dem ersten Zeitdatum liegende) zukünftige Transportfahrt, basierend auf der empfangenen zweiten Transportnutzungsbedingung. Das Hintergrundsystem umfasst mindestens ein Fahrtrekonstruktionsmodul. Das Fahrtrekonstruktionsmodul ist eingerichtet zum Rekonstruieren einer durchgeführten Transportfahrt, zumindest basierend auf einem von einer Entwertervorrichtung des Personentransportsystem empfangenen Check-In Datensatz, enthaltend zumindest die elektronische Mediumkennung, und einem bereitgestellten Check-Out Datensatz, enthaltend zumindest dieselbe elektronische Mediumkennung. Das Hintergrundsystem umfasst mindestens ein Generierungsmodul. Das Generierungsmodul ist eingerichtet zum Generieren eines Abrechnungsdatensatzes, zumindest basierend auf der rekonstruierten Transportfahrt und einer mit der elektronischen Mediumkennung verknüpften Transportnutzungsbedingung des Nutzerdatensatzes.

Indem im Gegensatz zum Stand der Technik anmeldungsgemäß ein Hintergrundsystem bereitgestellt wird, das eine variable Verknüpfung einer erfassten elektronischen Mediumkennung mit unterschiedlichen Transportnutzungsbedingungen ermöglicht und damit eine variable Nutzung des Personentransportsystems erlaubt, wird bei einem Personentransportsystem mit offenen Ticketmedien der Nutzerkomfort erhöht und der infrastrukturelle Aufwand des Personentransportsystems reduziert. Anmeldungsgemäß wird es ermöglicht, den Gültigkeitsumfang des Ticketmediums (temporär) zu ändern, insbesondere zu erweitern, um beispielsweise mindestens eine weitere Person, die über kein Ticketmedium verfügt, und/oder einen zusätzlichen Gegenstand (kostenpflichtig) mitzunehmen, wie ein Fahrrad. Auf den Erwerb von Papiertickets kann verzichtet werden. Die hierfür erforderliche Infrastruktur kann zumindest reduziert werden. Entsprechend kann der Wartungsaufwand und Ressourcenaufwand bei dem Personentransportsystem reduziert werden. Zudem wird insbesondere ein Durchsatz an Entwertervorrichtungen und/oder Durchgangssperren ermöglicht, der Betriebsablauf ("check-in" / "check-out") nicht oder nicht wesentlich behindert.

Das Hintergrundsystem dient der Verwendung in einem Personentransportsystem. Das Hintergrundsystem (auch als Backend-System bezeichnet) kann durch mindestens eine Rechenvorrichtung gebildet sein, beispielsweise in Form eines Servers. Zum Beispiel kann eine Mehrzahl von verteilt angeordneten Rechenvorrichtungen vorgesehen sein. Auch kann als Hintergrundsystem ein Cloudsystem implementiert sein.

Das Hintergrundsystem weist einen oder mehrere (verteilt) angeordnete Datenspeicher auf. Ein Datenspeicher dient zum Speichern von insbesondere einer Mehrzahl an Nutzerdatensätzen (auch als Nutzerkonten bezeichnet) von insbesondere registrierten Nutzern bzw. deren Ticketmedien. Ein Nutzerdatensatz enthält zumindest eine elektronische Mediumkennung eines Ticketmediums und eine mit der elektronischen Mediumkennung verknüpfte erste Transportnutzungsbedingung. Die elektronische Mediumkennung berechtigt insbesondere zum Durchführen einer Transportfahrt mit einem Personentransportfahrzeug (auch als Transportfahrzeug bezeichnet) des Personentransportsystems von einer Starthaltestelle zu einer Zielhaltestelle.

Ein Ticketmedium ist vorliegend insbesondere nicht mit einem bestimmten Transportnutzungsbedingung bzw. einem bestimmten Fahrausweisprodukt kodiert.

Die elektronische Mediumkennung ist insbesondere eine elektronische Mediumkennung ausgewählt aus der Gruppe, umfassend:
- elektronische PAN (primary account number), falls das Ticketmedium eine (Open-Loop-)Bankkarte oder (Open-Loop-)Kreditkarte ist (in diesem Fall kann das Speichermittel insbesondere ein NFC-Speichermittel sein),
- elektronische Kartennummer, falls das Ticketmedium eine Closed-Loop-Karte ist,
- eine UUID (Universally Unique Identifier), falls das Ticketmedium über eine Bluetooth-Schnittstelle ausgelesen wird,
- eine IMEI (International Mobile Equipment Identity), MAC (Media-Access-Control)-Adresse oder andere geeignete Kennungen, insbesondere falls das Ticketmedium ein elektronisches Gerät ist.

Insbesondere ist die elektronische Mediumkennung eine systemweit eineindeutige Mediumkennung. Eine elektronische Mediumkennung ist insbesondere stets elektronisch (kontaktlos oder kontaktgebunden) auslesbar.

Bevorzugt meint eine elektronische Mediumkennung, insbesondere in Form einer elektronischen PAN, dass diese in ihrer Gesamtheit nur in einem Speichermittel des Ticketmediums gespeichert ist und insbesondere nicht optisch (oder einem anderen zweiten Speichermittel) des Ticketmedium durch einen Nutzer (vollständig) ablesbar ist.

Insbesondere ist ein Erfassungsmodul, beispielweise mit einer (kontaktlosen oder kontaktbehafteten) Schnittstelle, einer Schnittstellenvorrichtung des Personentransportsystems für das Erfassen der elektronischen Mediumkennung erforderlich. Die (kontaktlose oder kontaktbehaftete) Schnittstelle korrespondiert hierbei zu der (kontaktlosen oder kontaktbehafteten) Schnittstelle des Ticketmediums. Nicht abschließende Beispiele für kontaktbehaftete Ticketmediumschnittstellen sind Magnetstreifen und Europay-Mastercard-VISA-Chips (EMV-Chips); Beispiele für bevorzugte kontaktlose Ticketmediumschnittstellen sind Nearfield Communication-Schnittstellen (NFC-Schnittstellen) gemäß ISO 14443.

Eine Transportnutzungsbedingung gibt vorliegend insbesondere einen Gültigkeitsumfang einer einzelnen durch eine Schnittstellenvorrichtung erfassten elektronischen Mediumkennung an. Mit anderen Worten, eine Transportnutzungsbedingung kann ein Fahrausweisprodukt darstellen.

Ein Erfassungs- bzw. Lesevorgang kann auch als "Tap" bezeichnet werden. Insbesondere kann ein Nutzer das Ticketmedium an oder in die Schnittstelle einer Schnittstellenvorrichtung halten bzw. tappen, um ein Erfassen der elektronischen Mediumkennung zu bewirken. Wie bereits beschrieben wurde, kann das Tappen kontaktlos erfolgen, vorzugweise durch NFC (z.B. Smart Cards nach ISO 14443), durch das Einlesen eines optischen Codes (z.B. Barcode, QR-Code), der die elektronische Mediumkennung enthält, aus einem mobilen Endgerät, durch das Einlesen von Daten aus einer Bluetooth-Schnittstelle oder kontaktbehaftet durch das Einlesen von Daten aus einem Magnetstreifen oder aus einem kontaktbehafteten Chip aus einer Bankkarte oder Kreditkarte.

Ein Erfassen einer elektronischen Mediumkennung durch eine Entwertervorrichtung bzw. das Durchführen eines Taps an einer Entwertervorrichtung bei einem Betreten eines Transportfahrzeugs oder eines Haltestellenbereichs bewirkt insbesondere ein Einchecken eines Nutzers. In entsprechender Weise kann ein Erfassen einer elektronischen Mediumkennung durch eine Entwertervorrichtung bzw. das Durchführen eines Taps an einer Entwertervorrichtung bei einem Verlassen eines Transportfahrzeugs oder eines Haltestellenbereichs ein Auschecken eines Nutzers bewirken.

Eine erste Transportnutzungsbedingung kann insbesondere eine Basis-Transportnutzungsbedingung sein, bei der als Gültigkeitsumfang eine einzelne Transportfahrt für einen erwachsenen (bzw. vollzahlenden) Nutzer festgelegt ist. Es versteht sich, dass auch ein anderer Gültigkeitsumfang festgelegt sein kann. Insbesondere kann die erste Transportnutzungsbedingung in einem Registrierungsvorgang festgelegt sein. So kann eine Transportnutzungsbedingung beispielsweise zusätzlich von der Zugehörigkeit des Nutzers zu einer Nutzergruppe (z.B. eine bestimmte Tarifgruppe, wie Schüler, Vielfahrer etc.) abhängen.

Ein Nutzerdatensatz kann vorzugsweise weitere Nutzerdaten enthalten. Gemäß einer Ausführungsform kann das mindestens eine weitere Nutzerdatum ausgewählt sein aus der Gruppe, umfassend:
- Nutzername,
- Adressdaten des Nutzers, insbesondere eine Kommunikationsadresse (z.B. E-Mail-Adresse, Mobilfunknummer etc.),
- Nutzerpasswort,
- Abrechnungsdaten, und
- Transportdienstleistungstarifdaten
- Kontodaten,
- Daten mindestens eines weiteren Zahlmediums.

Ferner ist ein Fahrtrekonstruktionsmodul vorgesehen, um eine durchgeführte Transportfahrt zu rekonstruieren. Die Fahrtrekonstruktion basiert zumindest auf einem Check-In Datensatz, der den Beginn der zu rekonstruierenden Transportfahrt definiert, und einem Check-Out Datensatz, der das Ende der zu rekonstruierenden Transportfahrt definiert. Die Zuordnung eines Check-In Datensatz zu einem Check-Out Datensatz erfolgt insbesondere anhand der jeweils enthaltenden elektronischen Mediumkennung. Mit anderen Worten: Eine vom Fahrtrekonstruktionsmodul rekonstruierte Transportfahrt basiert also typischerweise auf einem Check-In Datensatz und einem (später generierten) Check-Out Datensatz, wobei beide Datensätze dieselbe elektronische Mediumkennung aufweisen.

Ein Check-In Datensatz wird durch eine Entwertervorrichtung an das Hintergrundsystem übertragen. Das Bereitstellen des Check-In Datensatzes kann ein Übertragen, durch eine Entwertervorrichtung, des Check-In Datensatzes umfassen. Alternativ oder zusätzlich kann das Bereitstellen eines Check-out Datensatzes auch durch das Hintergrundsystem (oder einer weiteren Rechenvorrichtung) erfolgen. Beispielsweise können Sensordaten, aus denen auf die Position des Nutzers geschlossen werden kann, dem Hintergrundsystem bereitgestellt werden. Basierend auf Referenzpositionsdaten (beispielsweise des Transportfahrzeugs und/oder Haltestellenbereiche) kann dann geschlossen werden, ob ein Nutzer das Transportfahrzeug und/oder einen Haltestellenbereich verlassen hat. Dann kann durch das Hintergrundsystem ein entsprechender Check-Out Datensatz generiert werden.

Basierend auf der rekonstruierten Transportfahrt und einer (augenblicklich) mit der elektronischen Mediumkennung verknüpften Transportnutzungsbedingung (z.B. eine erste Transportnutzungsbedingung und/oder eine zweite (sich von der ersten Transportnutzungsbedingung unterscheidende) Transportnutzungsbedingung) kann ein Abrechnungsdatensatz erstellt werden. Es versteht sich, dass weitere Daten, wie Tarifdaten etc., berücksichtigt werden können.

Es ist erkannt worden, dass eine (flexible) Zuordnung bzw. Verknüpfung einer elektronischen Mediumkennung mit zumindest zwei unterschiedlichen Transportnutzungsbedingungen ermöglicht wird, indem basierend auf einem erhaltenen Änderungsdatensatz eine (bestehende) Verknüpfung zwischen der elektronischen Mediumkennung und einer ersten Transportnutzungsbedingung (temporär) geändert wird, zumindest für eine zukünftige Transportfahrt. Unter zukünftig ist insbesondere zu verstehen, dass die Transportfahrt nach einem ersten Zeitdatum liegt.

Ein Empfangsmodul ist eingerichtet zum Empfangen eines von einer Schnittstellenvorrichtung des Personentransportsystems generierten Änderungsdatensatzes, enthaltend mindestens eine zweite Transportnutzungsbedingung. Die zweite Transportnutzungsbedingung unterscheidet sich von der ersten Transportnutzungsbedingung.

Eine zweite Transportnutzungsbedingung kann insbesondere eine weitere Transportnutzungsbedingung sein, bei der als Gültigkeitsumfang ein anderer oder zusätzlicher Umfang definiert ist als bei der ersten Transportnutzungsbedingung. Vorzugsweise kann einer zweiten Transportnutzungsbedingung eine Mehrzahl von Transportfahrten für eine Mehrzahl von erwachsenen (bzw. vollzahlenden) Nutzern festgelegt sein, mindestens eine zusätzliche Transportfahrt für einen nichterwachsenen (bzw. nicht-vollzahlenden) Nutzer festgelegt sein und/oder eine Transportfahrt für einen (erwachsenen) Nutzer mit einem Zusatzgepäck festgelegt sein, z.B. ein Fahrrad und/oder ein Hund und/oder ein bestimmtes Gepäckstück.

Neben der zweiten Transportnutzungsbedingung umfasst der Änderungsdatensatz eine Nutzerkennung, die eine Identifizierung eines Nutzerdatensatzes ermöglicht. Vorzugsweise kann die Nutzerkennung die elektronische Mediumkennung sein. Dann kann in einfacher Weise ein Nutzerdatensatz aus einer Mehrzahl von Nutzerdatensätzen durch einen Vergleich der elektronischen Mediumkennung des Änderungsdatensatzes mit den jeweiligen elektronischen Mediumkennungen des einen oder der mehreren gespeicherten Nutzerdatensatz/sätzen identifiziert werden. Bei Varianten der Anmeldung kann die Nutzerkennung auch eine andere Kennung sein, wie ein Nutzername, Adressdaten des Nutzers, Nutzerpasswort, aber auch einlesbare biometrische Merkmale eines Nutzers, wie Gesichtserkennung, Fingerabdruck, Iris-Scan und/oder dergleichen.

Der Änderungsdatensatz kann als elektronische Mediumkennung auch einen kryptografisch verschlüsselten Wert der elektronischen Medienkennung erhalten. In bevorzugter Weise kann der Änderungsdatensatz einen Hash-Wert der elektronischen Mediumkennung enthalten.

Das erste Zeitdatum kann ein Zeitstempel sein, insbesondere der Verknüpfungszeitpunkt oder Sendezeitpunkt der zweiten Transportnutzungsbedingung.

Gemäß einer bevorzugten Ausführungsform kann der Änderungsdatensatz in dem Check-In Datensatz enthalten sein und/oder diesen bilden. In diesem Fall ist die Schnittstellenvorrichtung insbesondere die Entwertervorrichtung, wie noch näher beschrieben wird.

Vorzugsweise kann der Änderungsdatensatz zusätzlich eine Vorrichtungskennung der Schnittstellenvorrichtung umfassen. Insbesondere kann der Änderungsdatensatz alternativ oder zusätzlich ein Positionsdatum der Schnittstellenvorrichtung umfassen.

Das Positionsdatum kann zumindest ein Bestimmen der Position der Schnittstellenvorrichtung zum Zeitpunkt des Erfassens der elektronischen Mediumkennung durch die Schnittstellenvorrichtung ermöglichen.

Ein vorliegendes Ändern der Verknüpfung zwischen der in dem identifizierten Nutzerdatensatz gespeicherten elektronischen Mediumkennung und der ersten Transportnutzungsbedingung meint insbesondere, dass zumindest temporär, also zumindest für eine zukünftige Transportfahrt, die Verknüpfung zwischen der elektronischen Mediumkennung und der ersten Transportnutzungsbedingung ersetzt wird durch eine Verknüpfung nur mit der zweiten Transportnutzungsbedingung oder ergänzt wird durch eine Verknüpfung mit der zweiten Transportnutzungsbedingung.

Das Personentransportsystem kann eine Mehrzahl von Transportfahrzeugen umfassen, wie Schienenfahrzeuge (z.B. Bahn, U-Bahn, Straßenbahn etc.), Kraftfahrzeuge (z.B. Bus), Wasserfahrzeuge und/oder Flugzeuge).

Gemäß einer weiteren Ausführungsform des anmeldungsgemäßen Hintergrundsystems kann das Hintergrundsystem ein Sendemodul umfassen. Das Sendemodul kann eingerichtet sein zum Senden (über ein drahtloses und/oder drahtgebundenes Kommunikationsnetz) einer Änderungsnachricht über die mindestens eine zweite Transportnutzungsbedingung an die Schnittstellenvorrichtung nach einer Änderung der Verknüpfung. Insbesondere kann eine Änderung des Gültigkeitsumfangs der entsprechenden elektronischen Mediumkennung durch die Änderungsnachricht bestätigt werden. Beispielsweise kann die Änderungsnachricht als Antwort auf einen empfangenen Änderungsdatensatz nach einer Änderung der Verknüpfung an die Schnittstellenvorrichtung, die zuvor den genannten Änderungsdatensatz ausgesendet hat, gesendet werden.

Alternativ oder zusätzlich kann das Hintergrundsystem ein Sendemodul umfassen, das eingerichtet ist zum Senden (über ein drahtloses und/oder drahtgebundenes Kommunikationsnetz) einer Änderungsnachricht über die mindestens eine zweite Transportnutzungsbedingung an eine in dem identifizierten Nutzerdatensatz gespeicherte Kommunikationsadresse nach einer Änderung der Verknüpfung. Die gespeicherte Kommunikationsadresse kann beispielsweise eine Kommunikationsadresse (z.B. Telefonnummer, E-Mail-Adresse etc.) des mobilen Endgeräts des Nutzers sein. Insbesondere kann eine Änderung des Gültigkeitsumfangs der entsprechenden elektronischen Mediumkennung durch die Änderungsnachricht bestätigt werden.

Gemäß einer weiteren bevorzugten Ausführungsform des anmeldungsgemäßen Hintergrundsystems kann der Änderungsdatensatz mindestens ein zweites Zeitdatum enthalten. Das zweite Zeitdatum kann eine Gültigkeitszeitdauer der zweiten Transportnutzungsbedingung angeben. Die zweite Zeitdauer kann beispielsweise Teil der zweiten Transportnutzungsbedingung sein. Beispielsweise kann die zweite Zeitdauer zwischen 2 Stunden und 1 Monat liegen, vorzugsweise zwischen 1 Tag und 1 Woche.

Das Hintergrundsystem kann mindestens ein Zeitmodul umfassen, eingerichtet zum Setzen eines Timers des Hintergrundsystems gemäß dem zweiten Zeitdatum (bei Erhalt des Änderungsdatensatzes). Ein Änderungsmodul kann eingerichtet sein zum Ändern der Verknüpfung zwischen der in dem identifizierten Nutzerdatensatz gespeicherten elektronischen Mediumkennung und der zweiten Transportnutzungsbedingung bei Detektion eines Ablaufs des Timers, basierend auf der ersten Transportnutzungsbedingung. Dies meint insbesondere, dass die Verknüpfung erneut geändert wird.

Ein (erneutes) Ändern der Verknüpfung zwischen der in dem identifizierten Nutzerdatensatz gespeicherten elektronischen Mediumkennung und der zweiten Transportnutzungsbedingung umfasst insbesondere, dass die Verknüpfung zwischen der elektronischen Mediumkennung und der zweiten Transportnutzungsbedingung (wieder) ersetzt wird durch die Verknüpfung der in dem identifizierten Nutzerdatensatz gespeicherten elektronischen Mediumkennung und der ersten Transportnutzungsbedingung (oder die Verknüpfung mit der zweiten Transportnutzungsbedingung wieder gelöscht bzw. entfernt wird). Hierdurch ist es möglich, die Anzahl an erforderlichen Änderungsdatensätzen zu reduzieren, wenn ein geänderter Gültigkeitsumfang während einer bestimmten zukünftigen Zeitdauer Gültigkeit haben soll.

Gemäß einer alternativen oder zusätzlichen Ausführungsform des anmeldungsgemäßen Hintergrundsystems kann der Änderungsdatensatz mindestens eine Fahrtanzahl enthalten. Die Fahrtanzahl kann die Anzahl an Transportfahrten (bzw. Taps) angeben, für die die zweite Transportnutzungsbedingung gültig ist.

Beispielsweise kann die Fahrtanzahl zwischen 1 und 10 Transportfahrten liegen, vorzugsweise zwischen 2 und 5 Transportfahrten.

Das Hintergrundsystem kann mindestens ein Zählmodul umfassen, eingerichtet zum Setzen eines Zählers entsprechend der Fahrtanzahl (bei Erhalt des Änderungsdatensatzes). Das Änderungsmodul kann eingerichtet sein zum Ändern der Verknüpfung zwischen der in dem identifizierten Nutzerdatensatz gespeicherten elektronischen Mediumkennung und der zweiten Transportnutzungsbedingung bei Detektion eines Ablaufs des Zählers, basierend auf der ersten Transportnutzungsbedingung. Dies meint insbesondere, dass die Verknüpfung erneut geändert wird.

Ein (erneutes) Ändern der Verknüpfung zwischen der in dem identifizierten Nutzerdatensatz gespeicherten elektronischen Mediumkennung und der zweiten Transportnutzungsbedingung umfasst insbesondere, dass die Verknüpfung zwischen der elektronischen Mediumkennung und der zweiten Transportnutzungsbedingung (wieder) ersetzt wird durch die Verknüpfung der in dem identifizierten Nutzerdatensatz gespeicherten elektronischen Mediumkennung und der ersten Transportnutzungsbedingung (oder die Verknüpfung mit der zweiten Transportnutzungsbedingung wieder gelöscht bzw. entfernt wird). Hierdurch ist es möglich, die Anzahl an erforderlichen Änderungsdatensätzen zu reduzieren, wenn ein geänderter Gültigkeitsumfang für eine bestimmte Anzahl an Fahrten Gültigkeit haben soll.

Gemäß einer weiteren Ausführungsform des anmeldungsgemäßen Hintergrundsystems kann das Hintergrundsystem ein Sendemodul umfassen. Das Sendemodul kann eingerichtet sein zum Senden (über ein drahtloses und/oder drahtgebundenes Kommunikationsnetz) eines empfangenen Änderungsdatensatz an mindestens eine weitere Schnittstellenvorrichtung des Personentransportsystems nach einer Änderung der Verknüpfung. Insbesondere kann eine Mehrzahl von Schnittstellenvorrichtung (beispielsweise alle Schnittstellenvorrichtung) des Personentransportsystems über den geänderten Gültigkeitsumfang (und Gültigkeitszeitdauer und/oder gültige Fahrtanzahl) einer bestimmten elektronischen Mediumkennung informiert werden.

Die mindestens eine weitere Schnittstellenvorrichtung des Personentransportsystems kann den mindestens einen Änderungsdatensatz in einem (jeweiligen) lokalen Datenspeicher speichern. Hierdurch kann eine durch die mindestens eine weitere Schnittstellenvorrichtung, insbesondere in Form einer Durchgangssperre und/oder Entwertervorrichtung, erfasste elektronische Mediumkennung lokal geprüft werden. Beispielsweise kann ein Durchgang durch eine Durchgangssperre freigegeben oder gesperrt werden, basierend auf dieser Prüfung.

Ein weiterer Aspekt der Anmeldung ist eine Schnittstellenvorrichtung für ein Personentransportsystem. Die Schnittstellenvorrichtung ist in einem Personentransportfahrzeug und/oder in einem Transporthaltestellenbereich anordenbar. Die Schnittstellenvorrichtung umfasst mindestens ein Erfassungsmodul, eingerichtet zum Erfassen einer elektronischen Mediumkennung eines Ticketmediums. Die elektronische Mediumkennung ist eine zur Durchführung einer Transportfahrt (mit einem Personentransportfahrzeug) berechtigende und mit einer ersten Transportnutzungsbedingung verknüpfte elektronische Mediumkennung. Die Schnittstellenvorrichtung umfasst mindestens ein Detektionsmodul. Das Detektionsmodul ist eingerichtet zum Detektieren einer über eine Nutzerschnittstelle der Schnittstellenvorrichtung bestimmten (bzw. ausgewählten) und mit der erfassten Mediumkennung verknüpfbaren zweiten Transportnutzungsbedingung. Die Schnittstellenvorrichtung umfasst mindestens ein Verknüpfungsmodul. Das Verknüpfungsmodul ist eingerichtet zum (temporären) Verknüpfen einer erfassten elektronischen Mediumkennung mit der bestimmten zweiten Transportnutzungsbedingung. Die Schnittstellenvorrichtung umfasst mindestens ein Generierungsmodul. Das Generierungsmodul ist eingerichtet zum Generieren eines Änderungsdatensatzes, enthaltend die erfasste elektronische Mediumkennung, die mit der erfassten elektronischen Mediumkennung verknüpfte zweite Transportnutzungsbedingung und mindestens ein erstes Zeitdatum. Die Schnittstellenvorrichtung umfasst mindestens ein Sendemodul. Das Sendemodul ist eingerichtet zum Senden des generierten Änderungsdatensatzes an ein Hintergrundsystem des Personentransportsystems, insbesondere an ein zuvor beschriebenes Hintergrundsystem.

Wie beschrieben wurde, kann das Erfassungsmodul eine (kontaktlose oder kontaktbehaftete) Schnittstelle sein oder umfassen, die eingerichtet ist zum Auslesen der elektronischen Mediumkennung aus einem an oder in die Schnittstelle gehaltenen (bzw. getappten) Ticketmedium. Es versteht sich, dass eine Schnittstellenvorrichtung zwei oder mehr unterschiedliche Erfassungsmodule aufweisen kann.

Über eine Nutzerschnittstelle kann ein Nutzer insbesondere eine zweite Transportnutzungsbedingung bestimmen, insbesondere aus einer Mehrzahl von auswählbaren zweiten Transportnutzungsbedingungen auswählen. Vorzugsweise kann die Nutzerschnittstelle ein Touchdisplay umfassen. Bei Varianten der Anmeldung können auch anderen Nutzerschnittstellen vorgesehen sein, wie mindestens eine Taste, eine Tastatur etc. Das Betätigen der Nutzerschnittstelle und damit insbesondere eine Bestimmen der zweiten Transportnutzungsbedingung ist durch ein Detektionsmodul detektierbar. Das Erfassen der elektronischen Mediumkennung durch das Erfassungsmodul erfolgt insbesondere nach einer Detektion einer bestimmten zweiten Transportnutzungsbedingung.

Die bestimmte zweite Transportnutzungsbedingung und die (unmittelbar danach (z.B. innerhalb von 0,1 s bis 20 s) erfasste elektronischen Mediumkennung werden durch ein Verknüpfungsmodul bzw. Zuordnungsmodul miteinander verknüpft. Dann kann ein (zuvor beschriebener) Änderungsdatensatz generiert und (in zuvor beschriebener Weise) an ein (zuvor beschriebenes) Hintergrundsystem gesendet werden.

Gemäß einer bevorzugten Ausführungsform der anmeldungsgemäßen Schnittstellenvorrichtung kann die Schnittstellenvorrichtung eine Entwertervorrichtung sein. Eine Entwertervorrichtung eines Personentransportsystems ist eingerichtet zum Entwerten eines Ticketmediums durch Erfassen der in einem Speichermittel des Ticketmediums gespeicherten elektronischen Mediumkennung. Insbesondere ist es in einem Personentransportsystems für eine berechtigte Nutzung eines Transportfahrzeugs erforderlich, dass das Ticketmedium vor einer entsprechenden Nutzung entwertet wird, also die elektronische Mediumkennung erfasst wird. Insbesondere kann die mindestens eine Entwertervorrichtung in einem Haltestellenbereich und/oder einem Transportfahrzeug angeordnet sein, um ein Entwerten des Ticketmediums bei einem Betreten des Haltestellenbereichs bzw. des Transportfahrzeugs (also des zahlungspflichtigen Raums) zu ermöglichen.

Wie noch beschrieben wird, kann eine erfasste elektronische Mediumkennung gespeichert und für eine Ticketmediuminspektion von einer Inspektionsvorrichtung verwendet werden, um zu überprüfen, ob das Ticketmedium vor der Transportfahrt entwertet wurde oder nicht.

Vorzugsweise kann bei einer Entwertervorrichtung der Änderungsdatensatz ein Check-In Datensatz sein und/oder in einem Check-In Datensatz integriert sein. In besonders nutzerfreundlicher Weise kann der Gültigkeitsumfang einer (einzelnen) erfassten elektronischen Mediumkennung (temporär) angepasst werden.

Gemäß einer weiteren Ausführungsform der anmeldungsgemäßen Schnittstellenvorrichtung kann die Schnittstellenvorrichtung ein Prüfmodul umfassen. Das Prüfmodul kann eingerichtet sein zum Prüfen einer Zulässigkeit der erfassten elektronischen Mediumkennung, basierend auf einem Vergleich der erfassten elektronischen Mediumkennung mit einer Mehrzahl an in einer Negativliste gespeicherten elektronischen Mediumkennungen. In einer Negativliste können insbesondere die elektronischen Mediumkennungen gespeichert sein, die nicht (mehr) zur Nutzung eines Transportfahrzeugs des Personentransportsystems berechtigt sind.

Der Vergleich kann durch das Prüfmodul durchgeführt werden oder durch ein weiteres Prüfmodul des Hintergrundsystems oder einer weiteren Rechenvorrichtung. Die Negativliste kann in einem lokalen Datenspeicher der Schnittstellenvorrichtung (vorzugsweise jeder Schnittstellenvorrichtung) gespeichert sein. Dann kann das Prüfmodul eine erfasste elektronische Mediumkennung mit der mindestens einen in der Negativliste gespeicherten elektronischen Mediumkennung vergleichen. Alternativ oder zusätzlich kann die Negativliste in einem Datenspeicher des Hintergrundsystems (oder einer weiteren Rechenvorrichtung) gespeichert sein. Dann kann das Prüfmodul die elektronische Mediumkennung als Prüfanfrage an das Hintergrundsystem (oder die weitere Rechenvorrichtung) senden. Als Antwort auf die Prüfanfrage kann das Prüfmodul der Schnittstellenvorrichtung das Vergleichsergebnis empfangen.

Die Schnittstellenvorrichtung kann ein Freigabemodul umfassen. Das Freigabemodul kann eingerichtet sein zum Freigeben eines Passierens der Schnittstellenvorrichtung, wenn die erfasste elektronische Mediumkennung eine zulässige elektronische Mediumkennung ist. Eine elektronische Mediumkennung ist insbesondere dann zulässig, wenn in dem Vergleich festgestellt wird, dass die empfangene elektronische Mediumkennung zu keiner in der Negativliste gespeicherten elektronischen Mediumkennungen korrespondiert, insbesondere mit keiner identisch ist.

Das Freigabemodul kann eingerichtet sein zum Verweigern eines Passierens der Schnittstellenvorrichtung, wenn die erfasste elektronische Mediumkennung eine nicht-zulässige elektronische Mediumkennung ist. Eine elektronische Mediumkennung ist insbesondere dann nicht zulässig, wenn in dem Vergleich festgestellt wird, dass die empfangene elektronische Mediumkennung zu einer in der Negativliste gespeicherten elektronischen Mediumkennung korrespondiert, insbesondere mit einer identisch ist.

Ein Freigeben des Passierens einer Entwertervorrichtung kann insbesondere ein (optisches und/oder akustisches) Anzeigen einer Freigabeinformation sein. Ein Verweigern des Passierens einer Entwertervorrichtung kann insbesondere ein (optisches und/oder akustisches) Anzeigen einer Verweigerungsinformation sein. Wie noch beschrieben wird, kann bei einer Durchgangssperre, in der eine zuvor beschriebene Entwertervorrichtung integriert sein kann, ein Passieren mittels eines Sperrelements verhindert und freigegeben werden.

Insbesondere kann das Risiko einer unberechtigten Nutzung eines Transportfahrzeugs reduziert werden.

Es versteht sich, dass alternativ oder zusätzlich ein Vergleich mit einer Positivliste erfolgen kann.

Gemäß einer weiteren Ausführungsform der anmeldungsgemäßen Schnittstellenvorrichtung kann die Schnittstellenvorrichtung ein Empfangsmodul umfassen. Das Empfangsmodul kann eingerichtet sein zum Empfangen eines (zuvor beschriebenen) Änderungsdatensatzes von einer weiteren Schnittstellenvorrichtung des Personentransportsystems und/oder von dem Hintergrundsystem. Die Schnittstellenvorrichtung, insbesondere eine Entwertervorrichtung, kann einen (lokalen) Datenspeicher umfassen, eingerichtet zum Speichern des empfangenen Änderungsdatensatzes.

Die Schnittstellenvorrichtung kann ein Prüfmodul umfassen. Das Prüfmodul kann eingerichtet sein zum Prüfen der Zulässigkeit der erfassten elektronischen Mediumkennung, basierend auf einem Vergleich der erfassten elektronischen Mediumkennung mit der elektronischen Mediumkennung des gespeicherten Änderungsdatensatzes. Das Prüfmodul kann eine erfasste elektronische Mediumkennung mit der mindestens einen in dem Datenspeicher gespeicherten elektronischen Mediumkennung vergleichen.

Die Schnittstellenvorrichtung kann ein Freigabemodul umfassen. Das Freigabemodul kann eingerichtet sein zum Freigeben eines Passierens der Schnittstellenvorrichtung, wenn die erfasste elektronische Mediumkennung zu der gespeicherten elektronischen Mediumkennung korrespondiert (insbesondere identisch ist).

Das Freigabemodul kann eingerichtet sein zum Verweigern eines Passierens der Schnittstellenvorrichtung, wenn die erfasste elektronische Mediumkennung zu der gespeicherten elektronischen Mediumkennung nicht korrespondiert (insbesondere nicht identisch ist).

Ein Freigeben des Passierens einer Entwertervorrichtung kann insbesondere ein (optisches und/oder akustisches) Anzeigen einer Freigabeinformation sein. Ein Verweigern des Passierens einer Entwertervorrichtung kann insbesondere ein (optisches und/oder akustisches) Anzeigen einer Verweigerungsinformation sein. Wie noch beschrieben wird, kann eine Durchgangssperre, in der eine zuvor beschriebene Entwertervorrichtung integriert sein kann, ein Passieren mittels eines Sperrelements verhindern und freigeben.

Das Risiko einer unberechtigten Nutzung eines Transportfahrzeugs kann noch weiter reduziert werden.

Wie noch näher beschrieben wird, kann bei einer weiteren Ausführungsform der anmeldungsgemäßen Schnittstellenvorrichtung die Schnittstellenvorrichtung, insbesondere in Form einer Entwertervorrichtung, in einer Durchgangssperre integriert sein.

Wie bereits beschrieben wurde, kann die Schnittstellenvorrichtung einen Datenspeicher aufweisen. Gemäß einer weiteren Ausführungsform kann der Datenspeicher eingerichtet sein zum (lokalen) Speichern des Änderungsdatensatzes und/oder eines Check-In Datensatzes. Der Datenspeicher kann vorzugsweise zum Bereitstellen des Änderungsdatensatzes und/oder eines Check-In Datensatzes eingerichtet sein, derart, dass der mindestens eine gespeicherte Änderungsdatensatz und/oder der mindestens eine Check-In Datensatz von einer Inspektionsvorrichtung über ein Datennetz empfangbar ist/sind. Insbesondere können sämtliche gespeicherten Datensätze durch eine Inspektionsvorrichtung über das Datennetz empfangbar sein.

Vorzugsweise kann die Schnittstellenvorrichtung, insbesondere in Form einer Entwertervorrichtung, eine erste Nahbereichsschnittstelle umfassen. Die Nahbereichsschnittstelle kann eingerichtet sein zum Empfangen von mindestens einer in einem Inspektionselement (das beispielsweise in einer Inspektionsvorrichtung integriert sein kann) gespeicherten Inspektionskennung. Die Entwertervorrichtung kann mindestens ein Authentifizierungsmodul umfassen, eingerichtet zum Überprüfen der Authentizität der empfangenen Inspektionskennung. Die Entwertervorrichtung kann mindestens ein Schlüsselmodul umfassen, eingerichtet zum Bereitstellen von einem einen Zugang zu einem Datennetz ermöglichenden Kommunikationsdatensatz bei einem positiven Authentifizierungsergebnis, derart, dass der Kommunikationsdatensatz von dem Inspektionselement empfangbar ist.

Eine Inspektionskennung ist insbesondere eine eindeutige Kennung, beispielsweise ein Zeichencode, die dem Inspektionselement und/oder dem Inspektor eindeutig zugeordnet ist. Vorzugsweise kann die Inspektionskennung irreversibel in einer ersten Speichereinheit des Inspektionselements gespeichert sein.

Die erste Nahbereichsschnittstelle kann eine NFC (Nearfield Communication) Schnittstelle sein. Alternativ zu einer NFC-Schnittstelle kann als erste Nahbereichsschnittstelle auch eine Infrarot-Schnittstelle, Bluetooth-Schnittstelle, WLAN-Schnittstelle, etc. vorgesehen sein. Weiter alternativ kann die erste Nahbereichsschnittstelle als drahtgebundene Datenschnittstelle ausgeführt sein, mit der ein Datendialog zwischen der Inspektionsvorrichtung und der Validatorvorrichtung betrieben wird. Eine solche drahtgebundene Datenschnittstelle kann z.B. als USB-, RS232-, RS485-Schnittstelle, drahtgebundenes LAN oder als proprietär entwickelte, drahtgebundene Datenschnittstelle ausgeführt sein.

Nach einem Empfang der Inspektionskennung kann eine Authentifizierungsprüfung durchgeführt werden. Vorzugsweise kann eine Positivliste von Inspektionskennungen in einem Datenspeicher der Entwertervorrichtung hinterlegt sein. Ein Authentifizierungsmodul, insbesondere in Form eines Vergleichsmoduls, kann durch einen Abgleich der empfangenen Inspektionskennung mit den gespeicherten Inspektionskennungen die Authentizität der empfangenen Inspektionskennung prüfen. Ein positives Authentifizierungsergebnis liegt in diesem Fall dann vor, wenn eine zu der empfangenen Inspektionskennung korrespondierende gespeicherte Inspektionskennung detektiert wird. Andernfalls ist das Authentifizierungsergebnis negativ.

Insbesondere nur bei einem positiven Authentifizierungsergebnis stellt ein Schlüsselmodul einen Kommunikationsdatensatz bereit. Der Kommunikationsdatensatz umfasst Informationen für einen (gesicherten) Zugang zu einem Datennetz, wie einem Bluetooth-Netz oder ein WLAN-Netz. Beispielsweise kann das Personentransportsystem, insbesondere die Schnittstellenvorrichtung (aber auch eine separate Kommunikationsvorrichtung des Personentransportsystems) eine weitere Schnittstelle aufweisen. Der Kommunikationsdatensatz kann insbesondere Daten umfassen, die für den Aufbau einer Nahbereichskommunikationsverbindung mit der weiteren Nahbereichsschnittstelle erforderlich sind. Die weitere Nahbereichsschnittstelle kann vorzugsweise eine Nahbereichsschnittstelle sein, welche eine insbesondere im Vergleich zu einer ersten Nahbereichsschnittstelle, wie eine NFC-Schnittstelle, höhere Datenübertragungsrate bereitstellt. Bevorzugt ist die weitere Nahbereichsschnittstelle eine WLAN-Schnittstelle. Alternativ kann die zweite Nahbereichsschnittstelle auch eine andere Schnittstelle sein, wie eine Bluetooth-Schnittstelle.

Der Kommunikationsdatensatz wird derart von dem Schlüsselmodul bereitgestellt, dass er von dem Inspektionselement insbesondere über die erste Nahbereichsschnittstelle und/oder eine weitere Schnittstelle der Schnittstellenvorrichtung empfangen werden kann.

Alternativ oder zusätzlich kann die Schnittstellenvorrichtung über eine weitere Schnittstelle verfügen. Beispielsweise kann eine andere Nahbereichsschnittstelle oder ein Display als weitere Schnittstelle vorgesehen sein. So kann der Kommunikationsdatensatz in Form eines QR (Quick Response)-Codes auf einem Display angezeigt werden.

Um in einfacher Weise eine empfangene Inspektionskennung von einer sonstigen Kennung zu unterscheiden, kann ferner eine entsprechende Information zusammen mit der Identifikationskennung übertragen werden und/oder die Inspektionskennung selber eine entsprechende Information umfassen.

Ein zu übertragender Änderungs- und/oder Check-In Datensatz kann zumindest eine zu der elektronischen Mediumkennung korrespondierende Information und/oder die elektronischen Mediumkennung selbst und, falls vorhanden, die hiermit verknüpfte zweite Transportnutzungsbedingung umfassen. Dann können in einem Inspektionsprozess die jeweiligen elektronischen Mediumkennungen der jeweiligen Ticketmedien der Nutzer eines Transportfahrzeugs ausgelesen und mit den über das Datennetz empfangenen elektronischen Mediumkennungen verglichen werden. Vorzugsweise können sämtliche Änderungs- und/oder Check-In Datensätze in Form einer Mediumkennungsliste mittels des Datennetzes übertragen werden.

Gemäß einer Ausführungsform kann der Kommunikationsdatensatz zumindest eine Datennetzkennung des Datennetzes umfassen. Beispielsweise kann die Datennetzkennung eine Datennetz-ID (Identifier) und/oder Schnittstellen-ID der weiteren Schnittstelle und/oder eine Schnittstellenadresse der weiteren Schnittstelle der Validatorvorrichtung sein. Bei einem bevorzugten WLAN (Wireless Local Area Network) Datennetz kann der Kommunikationsdatensatz eine statische SSID (Service Set Identifier) umfassen. Zur Erhöhung der Sicherheit kann anstelle der statischen SSID eine teilrandomisierte SSID oder eine randomisierte SSID verwendet werden. Besonders bevorzugt umfasst der Kommunikationsdatensatz ferner mindestens einen kryptographischen Schlüssel. Der Schlüssel kann ein Passwort, insbesondere ein zufällig generiertes Passwort, sein (z.B. WLAN-Passwort, Bluetooth-Passwort).

Hierdurch kann die Kommunikationssicherheit für die weitere Kommunikationsverbindung weiter erhöht werden.

Grundsätzlich kann das Datennetz, insbesondere die weitere Schnittstelle der Entwertervorrichtung, aus Sicherheitsgründen im Normalbetrieb deaktiviert sein. Um das Datennetz für die Übertragung zu nutzen, kann die Schnittstellenvorrichtung ein Aktivierungsmodul umfassen, eingerichtet zum Aktivieren des Datennetzes (für eine vorgegebene Zeitdauer), wie die weitere Schnittstelle, nach einem positiven Authentifizierungsergebnis. Die vorgegebene Zeitdauer kann zwischen 2 min und 15 min, insbesondere zwischen 3 min und 10 min liegen. Alternativ oder zusätzlich kann vorgesehen sein, dass nach der Übertragung des letzten aktuellen Nutzerdatensatz automatisch oder aufgrund einer entsprechenden Nachricht von der Inspektionsvorrichtung das Datennetz, wie die weitere Schnittstelle, wieder deaktiviert wird.

In der Praxis eines Inspektionsprozesses tritt das Problem auf, dass ein Nutzer, der ein Transportfahrzeug unberechtigt nutzt, sein Ticketmedium noch schnell an eine Entwertervorrichtung hält, wenn er einen Inspektor entdeckt. Um dies zu verhindern, kann die Schnittstellenvorrichtung mindestens ein Sperrmodul umfassen, eingerichtet zum Sperren des Erfassens von elektronischen Mediumkennungen nach einem positiven Authentifizierungsergebnis der Inspektionskennung. Bevorzugt unmittelbar (zumindest < 10 s, insbesondere zumindest < 2 s) nach der Erstellung des positiven Authentifizierungsergebnisses kann beispielsweise ein Steuerungsmodul einer Schnittstellenvorrichtung angesteuert werden, um das Erfassen von weiteren Kennungen zu sperren.

Das Sperrmodul kann vorzugsweise eingerichtet sein, eine Sperrnachricht auch an mindestens eine weitere, vorzugsweise sämtliche weiteren Entwertervorrichtung(en), die mit der Entwertervorrichtung des Sperrmoduls verbunden sind, zu übertragen. Hierdurch wird eine Sperrung an bevorzugt sämtlichen Entwertervorrichtung(en) eines Transportfahrzeugs bewirkt. Nach Beendigung des Inspektionsprozess kann der Empfang wieder durch die Inspektionsvorrichtung beispielsweise über eine (noch) vorhandene weitere Nahbereichsverbindung (z.B. WLAN-Verbindung) oder durch ein erneutes Auslesen einer Inspektionskennung (ggf. mit zusätzlicher manueller Bestätigung durch einen Inspektor) bewirkt werden. Auch kann die Sperrung an der nächsten Haltestation aufgehoben werden. Bevorzugt kann vorgesehen sein, dass das Sperrmodul bei Detektion einer Öffnung einer Fahrzeugtür den Empfang von Kennungen von Nutzeridentifikationselementen freigibt. Anschließend kann ein Inspektionselement in zuvor beschriebener Weise durch Auslesen einer Inspektionskennung den Inspektionsprozess starten und beispielsweise eine erneute Sperrung bewirken.

Ein weiterer Aspekt der Anmeldung ist eine Durchgangssperre für ein Personentransportsystem. Die Durchgangssperre umfasst eine zuvor beschriebene Schnittstellenvorrichtung, insbesondere eine zuvor beschriebene Schnittstellenvorrichtung, besonders bevorzugt eine zuvor beschriebene Entwertervorrichtung. Die Durchgangssperre umfasst mindestens ein zwischen einer Sperrposition und einer Freigabeposition bewegliches Sperrelement. Die Durchgangssperre umfasst mindestens ein Steuermodul, eingerichtet zum Steuern des Bewegens des Sperrelements zwischen der Sperrposition und der Freigabeposition.

Eine Durchgangssperre ist insbesondere ein Gate zu und/oder von einem kontrollierten Bereich. Eine Durchgangssperre verfügt als Sperrelement beispielsweise über mindestens eine schwenkbare, zurückziehbare und/oder teleskopierbare Tür. Auch kann die Durchgangssperre als Drehkreuz gebildet sein. Darüber hinaus gib es Durchgangssperren ohne strukturelle Sperrelemente, die die Zulässigkeit oder Nicht-Zulässigkeit des Durchgehens ausschließlich optisch und/oder akustisch anzeigen.

Im Ausgangszustand kann die Durchgangssperre in der Regel gesperrt sein. Das bedeutet insbesondere, dass das Sperrelement in der Sperrposition einen Nutzer am Durchgehen durch die Durchgangssperre physisch hindert. In anderen Fällen kann die Durchgangssperre im Ausgangszustand geöffnet sein und sich nur dann schließen, wenn ein Nutzer ohne gültige Zugangsberechtigung versucht, das Gate zu passieren. - Ohne Beschränkung der Allgemeinheit wird nachfolgend davon ausgegangen, dass das Gate im Ausgangszustand gesperrt ist und bei einer positiven Prüfung der Zugangsberechtigung eines Nutzers für das Durchgehen des Nutzers geöffnet werden soll.

Ein (lokales) Steuermodul der Durchgangssperre kann einen Aktor der Durchgangssperre ansteuern zum Verfahren des Sperrelements von der Sperrposition in die Freigabeposition und/oder umgekehrt. Das Steuermodul kann beispielsweise von dem zuvor beschriebenen Freigabemodul angesteuert werden und/oder das Freigabemodul umfassen. Ein Freigeben eines Passierens einer Schnittstellenvorrichtung durch ein Freigabemodul umfasst insbesondere ein Ansteuern, durch das Steuermodul, eines Aktors der Durchgangssperre, derart, dass das Sperrelement von der Sperrposition in die Freigabeposition bewegt wird. Ein Verweigern eines Passierens einer Schnittstellenvorrichtung durch ein Freigabemodul umfasst insbesondere ein Ansteuern, durch das Steuermodul, eines Aktors der Durchgangssperre, derart, dass das Sperrelement von der Freigabeposition in die Sperrposition bewegt wird oder in der Sperrposition verbleibt.

Gemäß einer bevorzugten Ausführungsform der anmeldungsgemäßen Durchgangssperre kann das Steuermodul eingerichtet sein zum Steuern des Bewegens des Sperrelements zwischen der Sperrposition und der Freigabeposition, basierend auf der mit der erfassten elektronischen Mediumkennung verknüpften (zweiten) Transportnutzungsbedingung. Insbesondere ist anmeldungsgemäß erkannt worden, dass eine zweite Transportnutzungsbedingung andere Anforderungen an ein Verfahren des Sperrelements haben kann, als eine erste Transportnutzungsbedingung haben kann. Einerseits muss weiterhin sichergestellt werden, dass keine unberechtigten Nutzer die Durchgangssperre passieren können. Andererseits kann beispielsweise die normale Öffnungszeitdauer, die insbesondere für einen (erwachsenen) Nutzer konfiguriert ist, nicht ausreichen, um beispielsweise zwei oder mehr Nutzer bei Erfassung nur einer einzelnen elektronischen Mediumkennung (die mit einer entsprechenden zweiten Transportnutzungsbedingung verknüpft ist) passieren zu lassen (zumindest in nutzerkomfortabler Weise).

Bevorzugt kann das Steuermodul eingerichtet sein zum Halten des Sperrelements in der Freigabeposition für eine Freigabezeitdauer. Die Länge der Freigabezeitdauer kann auf der mit der erfassten elektronischen Mediumkennung verknüpften (insbesondere zweiten) Transportnutzungsbedingung basieren. Beispielsweise kann der mindestens einen zweiten Transportnutzungsbedingung eine Verlängerungszeitdauer zugeordnet sein. Wenn die zweite Transportnutzungsbedingung detektiert wird, beispielsweise durch ein Prüfmodul oder Freigabemodul, kann eine Basis-Freigabezeitdauer um die Verlängerungszeitdauer verlängert werden. Beispielsweise kann eine Zuordnungstabelle hinterlegt sein, in der jeder zweiten Transportnutzungsbedingung jeweils eine Verlängerungszeitdauer zugeordnet ist. Die Zuordnungstabelle kann in dem Datenspeicher einer Schnittstellenvorrichtung gespeichert sein. Eine Basis-Freigabezeitdauer kann der ersten Transportnutzungsbedingung zugeordnet sein.

Gemäß einer bevorzugten Ausführungsform der anmeldungsgemäßen Durchgangssperre kann die Durchgangssperre mindestens einen Sensor (z.B. Lichtschranke oder dergleichen) umfassen. Der mindestens eine Sensor kann eingerichtet sein zum Detektieren von Passagen der Durchgangssperre in einer Freigabeposition des Sperrelements. Insbesondere kann der Sensor die Passagen bzw. die entsprechende Anzahl an Nutzern zählen, die in einer Freigabeposition des Sperrelements (also vor einem erneuten Bewegen des Sperrelements in die Sperrposition) die Durchgangssperre passieren.

Die Transportnutzungsbedingung kann als Gültigkeitsumfang einer einzelnen durch die Schnittstellenvorrichtung erfassten elektronischen Mediumkennung (also insbesondere eines einzelnen Taps) eine bestimmte Anzahl n_{N} an Nutzern (bzw. Transportfahrten durch eine entsprechende Anzahl an Nutzern) festlegen. Das Steuermodul kann eingerichtet sein zum Bewegen des Sperrelements von der Freigabeposition in die Sperrposition (erst) bei einer Detektion einer Anzahl n_{P} von Passagen, die der bestimmten Anzahl n_{N} von Nutzern entspricht. Wenn beispielsweise die Anzahl n_{N} = 4 ist, dann kann das Sperrelement, unter Kontrolle des Steuermoduls, in der Freigabeposition bleiben, bis der Sensor eine Anzahl n_{P} = 4 detektiert hat.

Um das Risiko eines Passierens der Durchgangssperre durch einen Unberechtigten weiter zu reduzieren, wird gemäß einer weiteren Ausführungsform der anmeldungsgemäßen Durchgangssperre vorgeschlagen, dass die Durchgangssperre mindestens einen nach jeder detektierten Passage startbaren Timer umfassen kann. Das Steuermodul kann eingerichtet sein zum Bewegen des Sperrelements von der Freigabeposition in die Sperrposition bei Ablauf des Timers, insbesondere auch wenn die detektierte Anzahl n_{P} von Passagen noch nicht die Anzahl n_{N} von Nutzern erreicht hat. Als Zeitdauer des Timers kann eine Zeitdauer zwischen 5 und 30 Sekunden gesetzt werden, vorzugsweise zwischen 10 und 15 Sekunden.

Ein noch weiterer Gegenstand der Anmeldung ist ein Personentransportsystem. Das Personentransportsystem umfasst mindestens ein zuvor beschriebenes Hintergrundsystem. Das Personentransportsystem umfasst mindestens eine Schnittstellenvorrichtung, insbesondere eine zuvor beschriebene Schnittstellenvorrichtung, insbesondere bevorzugt eine zuvor beschriebene Durchgangssperre. Die Schnittstellenvorrichtung ist zumindest eingerichtet zum Erfassen einer elektronischen Mediumkennung eines Ticketmediums und/oder einer Nutzerkennung zum Identifizieren eines gespeicherten Nutzerdatensatzes. Die Schnittstellenvorrichtung ist zumindest eingerichtet zum Detektieren einer über eine Nutzerschnittstelle der Schnittstellenvorrichtung bestimmten Transportnutzungsbedingung. Die Schnittstellenvorrichtung ist zumindest eingerichtet zum Generieren eines Änderungsdatensatzes, enthaltend zumindest die erfasste elektronische Mediumkennung und/oder Nutzerkennung, die bestimmte Transportnutzungsbedingung und mindestens ein erstes Zeitdatum. Die Schnittstellenvorrichtung ist zumindest eingerichtet zum Senden des generierten Änderungsdatensatzes an das Hintergrundsystem.

Das anmeldungsgemäße Personentransportsystem kann ferner mindestens ein Transportfahrzeug und/oder ein Haltestellenbereich umfassen. Darüber hinaus kann das Personentransportsystem vorzugsweise eine Mehrzahl von Schnittstellenvorrichtungen umfassen. Beispielsweise können eine Mehrzahl von Entwertervorrichtungen und/oder eine Mehrzahl von Durchgangssperren vorgesehen sein. Alternativ oder zusätzlich kann die mindestens eine Schnittstellenvorrichtung ein Fahrkartenautomat sein und/oder ein mobiles Endgerät eines Nutzers.

Beispielsweise kann eine Computeranwendung (auch als App bezeichnet) in Form einer Transportanwendung auf dem mobilen Endgerät gespeichert sein. Beispielhafte und nicht abschließende mobile Endgeräte sind hierbei Smartphones, Tablet-Computer, mobile Spielkonsolen, Laptops, Netbooks, Datenbrillen, Smart-Watches und ähnliche Wearables.

Darüber hinaus kann das Personentransportsystem mindestens ein (zuvor beschriebenes) Ticketmedium umfassen.

Ein noch weiterer Aspekt ist ein (computerimplementiertes) Verfahren zum Betreiben eines (insbesondere zuvor beschriebenen) Personentransportsystems mit einem Hintergrundsystem, insbesondere einem zuvor beschriebenen Hintergrundsystem. Das Verfahren umfasst:
- Speichern mindestens eines Nutzerdatensatzes, enthaltend zumindest eine zum Durchführen einer Transportfahrt (mit einem Personentransportfahrzeug des Personentransportsystems) berechtigende elektronische Mediumkennung und mindestens eine mit der elektronischen Mediumkennung verknüpfte erste Transportnutzungsbedingung,
- Empfangen eines von einer Schnittstellenvorrichtung des Personentransportsystems generierten Änderungsdatensatzes, enthaltend mindestens eine zweite Transportnutzungsbedingung, mindestens ein erstes Zeitdatum und mindestens eine Nutzerkennung zum Identifizieren eines gespeicherten Nutzerdatensatzes, und
- Ändern der Verknüpfung zwischen der in dem identifizierten Nutzerdatensatz gespeicherten elektronischen Mediumkennung und der ersten Transportnutzungsbedingung für mindestens eine zukünftige Transportfahrt, basierend auf der empfangenen zweiten Transportnutzungsbedingung,
- Rekonstruieren einer durchgeführten Transportfahrt, zumindest basierend auf einem von einer Entwertervorrichtung des Personentransportsystem empfangenen Check-In Datensatz, enthaltend zumindest die elektronische Mediumkennung, und auf einem bereitgestellten Check-Out Datensatz, enthaltend zumindest dieselbe elektronische Mediumkennung, und
- Generieren eines Abrechnungsdatensatzes, zumindest basierend auf der rekonstruierten Transportfahrt und einer mit der elektronischen Mediumkennung verknüpften Transportnutzungsbedingung des Nutzerdatensatzes (wobei der Nutzerdatensatz bestimmbar ist, basierend auf der in dem Check-In Datensatz und Check-Out Datensatz jeweils enthaltenden elektronischen Mediumkennung).

Ein Modul oder eine Vorrichtung kann vorliegend zumindest teilweise aus Software und/oder zumindest teilweise aus Hardware gebildet sein. Insbesondere kann eine Vorrichtung/ein Modul geeignete Rechenelemente (z.B. Prozessor, Speicher etc.) umfassen, um Softwareelemente (bzw. Computercode) auszuführen. Es sei ferner angemerkt, dass Begriffe, wie "erste"; "zweite" etc. nicht eine Reihenfolge angeben, sondern insbesondere zur Unterscheidung zweier Elemente (z.B. Transportnutzungsbedingung, Zeitdatum etc.) dienen.

Die Merkmale der Hintergrundsysteme, Schnittstellenvorrichtungen, Durchgangssperren, Personentransportsysteme und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Hintergrundsystem, die anmeldungsgemäße Schnittstellenvorrichtung, die anmeldungsgemäße Durchgangssperre, das anmeldungsgemäße Personentransportsystem und das anmeldungsgemäße Verfahren auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Personentransportsystems gemäß der vorliegenden Anmeldung mit einem Ausführungsbeispiel eines Hintergrundsystems gemäß der vorliegenden Anmeldung,
- Fig. 2: eine schematische Ansicht eines Ausführungsbeispiel einer Schnittstellenvorrichtung in Form einer Entwertervorrichtung gemäß der vorliegenden Anmeldung,
- Fig. 3: eine schematische Ansicht eines Ausführungsbeispiels einer Durchgangssperre gemäß der vorliegenden Anmeldung,
- Fig. 4: ein Diagramm eines Ausführungsbeispiels eines Verfahrens gemäß der vorliegenden Anmeldung,
- Fig. 5: ein Ablaufdiagramm eines weiteren Ausführungsbeispiels eines Verfahrens gemäß der vorliegenden Anmeldung,
- Fig. 6: ein Ablaufdiagramm eines weiteren Ausführungsbeispiels eines Verfahrens gemäß der vorliegenden Anmeldung,
- Fig. 7: ein Ablaufdiagramm eines weiteren Ausführungsbeispiels eines Verfahrens gemäß der vorliegenden Anmeldung, und
- Fig. 8: ein Ablaufdiagramm eines weiteren Ausführungsbeispiels eines Verfahrens gemäß der vorliegenden Anmeldung.

Ähnliche Elemente werden nachfolgend mit ähnlichen Bezugszeichen bezeichnet.

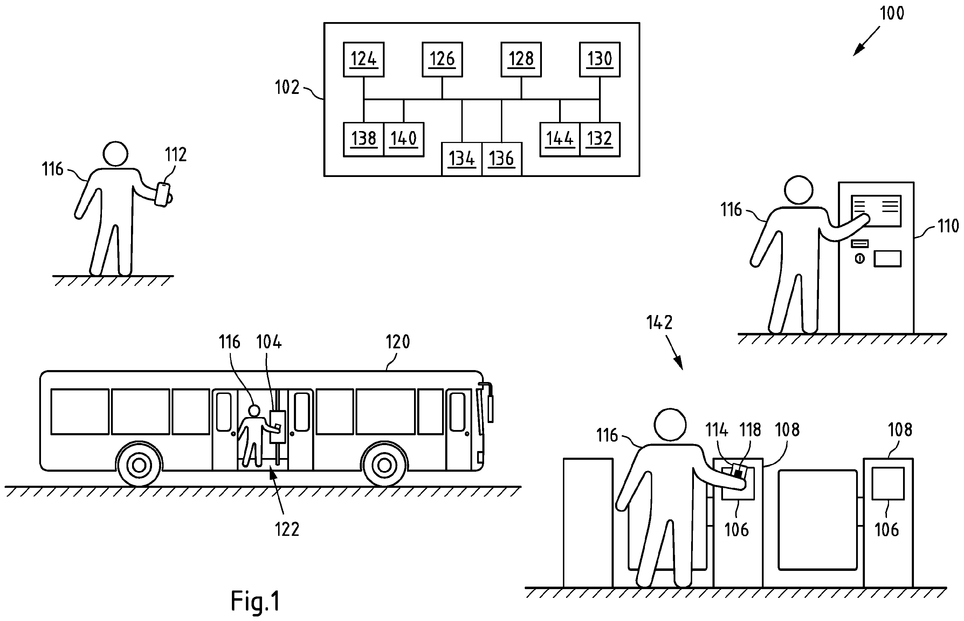

Die Figur 1 zeigt eine schematische Ansicht eines Ausführungsbeispiels eines Personentransportsystems 100 gemäß der vorliegenden Anmeldung mit einem Ausführungsbeispiel eines Hintergrundsystems 102 gemäß der vorliegenden Anmeldung.

Das Personentransportsystem 100 umfasst neben dem mindestens einen Hintergrundsystem 102 mindestens eine Schnittstellenvorrichtung 104, 106, 110, 112, vorzugsweise eine Mehrzahl von Schnittstellenvorrichtungen 104, 106, 110, 112. Beispielhaft sind vorliegend als Schnittstellenvorrichtung 104 mindestens eine Entwertervorrichtung 104 und/oder mindestens eine in einer Durchgangssperre 108 angeordnete Schnittstellenvorrichtung 106 (insbesondere auch eine Entwertervorrichtung) und/oder mindestens ein mobiles Endgerät 112 (z.B. ein Smartphone) eines Nutzers 116 und/oder mindestens ein Fahrkartenautomat 110 angeordnet.

Eine Schnittstellenvorrichtung 104 kann in einem Transportfahrzeug 120 (z.B. ein Bus, eine Bahn etc.) angeordnet sein, insbesondere in einem Eingangsbereich 122 und/oder einem Ausgangsbereich 122 des Transportfahrzeugs 120. Das Personentransportsystem 100 kann vorzugsweise das mindestens eine Transportfahrzeug 120 umfassen. Alternativ oder zusätzlich kann eine Schnittstellenvorrichtung 106, 110 in einem Haltestellenbereich 142 des Personentransportsystems 100 angeordnet sein.

Darüber hinaus kann das Personentransportsystem 100 mindestens ein Ticketmedium 114 umfassen, vorzugsweise eine Vielzahl von Ticketmedien 114. Ein Ticketmedium 114 gemäß der vorliegenden Anmeldung kann zumindest ein Speichermittel 118 umfassen. Das Speichermittel 118 dient der Speicherung der elektronischen Mediumkennung des Ticketmediums 114. Die elektronische Mediumkennung ist insbesondere über eine nicht gezeigte (kontaktlose und/der kontaktbehaftete) Schnittstelle des Ticketmediums 114 auslesbar.

Das Ticketmedium kann vorzugsweise ein kreditkartenbasiertes und/oder debitkartenbasiertes Ticketmedium sein. Bevorzugt kann das Ticketmedium eine Kreditkarte und/oder eine Debitkarte sein. Auch kann das kartenbasierte Ticketmedium ein mobiles Endgerät sein, auf dem eine Kreditkarte und/oder Debitkarte elektronisch abgebildet ist bzw. mit dem eine Kreditkarte und/oder Debitkarte elektronisch (eineindeutig) verknüpft ist. Nicht abschließende Beispiele eines solchen Konzepts sind Apple Pay, Google Pay oder PayPal.

Eine Schnittstellenvorrichtung 104, 106, 110, 112 des Personentransportsystems 100 ist zumindest eingerichtet zum Erfassen einer elektronischen Mediumkennung eines Ticketmediums und/oder einer Nutzerkennung (des Nutzerdatensatzes) zum Identifizieren eines gespeicherten Nutzerdatensatzes (aus der Vielzahl von gespeicherten Nutzerdatensätzen). Insbesondere kann eine Schnittstellenvorrichtung 104, 106, 110, 112 mindestens ein Erfassungsmodul umfassen, wie eine (kontaktlose) Nahfeldschnittstelle (z.B. NFC-Schnittstelle, Kamera, Bluetooth-Schnittstelle etc.) insbesondere zum Erfassen der elektronischen Mediumkennung und/oder eine kontaktbehaftete Schnittstelle (z.B. Magnetstreifenlesemodul etc.) insbesondere zum Erfassen der elektronischen Mediumkennung und/oder eine Nutzerschnittstelle (z.B. Tastatur, Touchdisplay etc.) insbesondere zum Erfassen einer (über die Nutzerschnittstelle eingebbaren) Nutzerkennung (z.B. Nutzername und Passwort etc.).

Die mindestens eine Schnittstellenvorrichtung 104, 106, 110, 112 des Personentransportsystems 100 ist ferner zumindest eingerichtet zum Detektieren einer über eine Nutzerschnittstelle (z.B. Tastatur, Touchdisplay etc.) der Schnittstellenvorrichtung 104, 106, 110, 112 bestimmten Transportnutzungsbedingung. Insbesondere kann dieselbe Nutzerschnittstelle verwendet werden, die bereits zum Erfassen der Nutzerkennung verwendet wurde. Bei Varianten der Anmeldung kann auch eine andere Nutzerschnittstelle eingesetzt werden.

Die mindestens eine Schnittstellenvorrichtung 104, 106, 110, 112 des Personentransportsystems 100 ist zudem zumindest eingerichtet zum Generieren eines Änderungsdatensatzes. Der Änderungsdatensatz enthält zumindest die erfasste elektronische Mediumkennung und/oder Nutzerkennung, die bestimmte Transportnutzungsbedingung und mindestens ein erstes Zeitdatum (insbesondere den Erfassungszeitpunkt (bzw. Zeitstempel) der elektronischen Mediumkennung und/oder Nutzerkennung oder den Sendezeitpunkt des Änderungsdatensatzes).

Die Schnittstellenvorrichtung 104, 106, 110, 112 des Personentransportsystems 100 ist darüber hinaus eingerichtet zum Senden des generierten Änderungsdatensatzes an das Hintergrundsystem 102.

Das dargestellte Hintergrundsystem 102 (insbesondere gebildet durch mindestens eine Rechenvorrichtung und/oder Cloud-System) umfasst mindestens einen Datenspeicher 124. Der Datenspeicher 124 ist zumindest eingerichtet zum Speichern mindestens eines Nutzerdatensatzes bzw. eines Nutzerkontos, vorzugsweise einer Vielzahl von Nutzerdatensätzen von insbesondere einer entsprechenden Zahl an unterschiedlichen Nutzern 116 des Personentransportsystems 100. Es versteht sich, dass weitere Daten in dem mindestens einen Datenspeicher 124 gespeichert sein können.

Der mindestens eine gespeicherte Nutzerdatensatz enthält zumindest eine zur Durchführung einer Transportfahrt berechtigende elektronische Mediumkennung und mindestens eine mit der elektronischen Mediumkennung verknüpfte erste Transportnutzungsbedingung. Optional können weitere Daten gespeichert sein, wie eine weitere Nutzerkennung, Abrechnungsdaten etc., wie bereits beschrieben wurde.

Darüber hinaus umfasst das Hintergrundsystem mindestens ein Empfangsmodul 134 und optional ein Sendemodul 136. Insbesondere kann mindestens ein bidirektionales Kommunikationsmodul zum Senden und Empfangen von Daten vorgesehen sein. Es versteht sich, dass zwei oder mehr Kommunikationsmodule für unterschiedliche Kommunikationstechnologien vorgesehen sein können.

Das mindestens eine Empfangsmodul 134 ist eingerichtet zum Empfangen, insbesondere über ein nicht gezeigtes drahtloses und/oder drahtgebundenes Kommunikationsnetz, eines von einer Schnittstellenvorrichtung 104, 106, 110, 112 des Personentransportsystems 100 generierten Änderungsdatensatzes. Wie bereits beschrieben wurde, enthält ein empfangener Änderungsdatensatz mindestens eine zweite Transportnutzungsbedingung, mindestens ein erstes Zeitdatum und mindestens eine Nutzerkennung zum Identifizieren eines gespeicherten Nutzerdatensatzes. Die Nutzerkennung kann die elektronische Mediumkennung sein und/oder eine weitere Nutzerkennung, wie ein Nutzername und/oder Nutzerpasswort.

Darüber hinaus weist das Hintergrundsystem 102 mindestens ein Änderungsmodul 126 auf. Das mindestens eine Änderungsmodul 126 ist eingerichtet zum Ändern der Verknüpfung zwischen der in dem (mittels der Nutzerkennung des empfangenen Änderungsdatensatzes) identifizierten Nutzerdatensatz gespeicherten elektronischen Mediumkennung und der ersten Transportnutzungsbedingung für mindestens eine zukünftige Transportfahrt, basierend auf der empfangenen zweiten Transportnutzungsbedingung.

Insbesondere wird durch das Änderungsmodul 126 (unmittelbar) nach einem Erhalt des Änderungsdatensatzes die Verknüpfung zwischen der ersten Transportnutzungsbedingung und der elektronischen Mediumkennung ersetzt oder ergänzt durch eine Verknüpfung zwischen dieser elektronischen Mediumkennung und der zweiten, sich von der ersten Transportnutzungsbedingung unterscheidenden, Transportnutzungsbedingung.

Ersetzen meint, dass für mindestens eine zukünftige, also die unmittelbar folgende, Transportfahrt nur die Verknüpfung zwischen der elektronischen Mediumkennung und der zweiten Transportnutzungsbedingung gültig ist. Ergänzen meint, dass für mindestens eine zukünftige, also die unmittelbar folgende, Transportfahrt sowohl die Verknüpfung zwischen der elektronischen Mediumkennung und der zweiten Transportnutzungsbedingung als auch die Verknüpfung zwischen der elektronischen Mediumkennung und der ersten Transportnutzungsbedingung gültig ist. Es versteht sich, dass mindestens eine weitere Verknüpfung zwischen der elektronischen Mediumkennung und mindestens einer weiteren zweiten Transportnutzungsbedingung gültig sein kann.

Das Hintergrundsystem 102 umfasst mindestens ein Fahrtrekonstruktionsmodul 128. Das Fahrtrekonstruktionsmodul 128 ist eingerichtet zum Rekonstruieren einer durchgeführten Transportfahrt, zumindest basierend auf einem von einer Entwertervorrichtung des Personentransportsystem empfangenen Check-In Datensatz (z.B. der genannte Änderungsdatensatz), enthaltend zumindest die elektronische Mediumkennung, und einem bereitgestellten Check-Out Datensatz, enthaltend zumindest dieselbe elektronische Mediumkennung. Weitere Daten, wie Fahrplandaten, Bewegungsdaten der Transportfahrzeuge etc. können durch das Fahrtrekonstruktionsmodul 128 berücksichtigt werden.

Ferner ist vorliegend ein Generierungsmodul 130 vorgesehen, das eingerichtet ist zum Generieren eines Abrechnungsdatensatzes, zumindest basierend auf der rekonstruierten Transportfahrt und der mit der elektronischen Mediumkennung verknüpften Transportnutzungsbedingung des Nutzerdatensatzes, also beispielsweise nur einer Verknüpfung der elektronischen Mediumkennung mit der zweiten Transportnutzungsbedingung oder den Verknüpfungen zwischen der elektronischen Mediumkennung und der ersten als auch der zweiten Transportnutzungsbedingung.

Optional kann das Hintergrundsystem 102 weitere Module 132, 138, 140 und 144 umfassen, wie ein Zeitmodul 138, einen Timer 140, ein Zählmodul 132 und einen Zähler 144.

Optional kann der Änderungsdatensatz mindestens ein zweites Zeitdatum (z.B. t = 2 h, t = 24 h, t = 48 h etc.) enthalten, das eine Gültigkeitszeitdauer der zweiten Transportnutzungsbedingung angibt. Das Zeitmodul 138 ist insbesondere eingerichtet zum Setzen des Timers 140 gemäß dem zweiten Zeitdatum, also in dem genannten Beispiel auf 2h, 24 h oder 48 h. Das Änderungsmodul 126 kann eingerichtet sein zum Ändern der Verknüpfung zwischen der in dem identifizierten Nutzerdatensatz gespeicherten elektronischen Mediumkennung und der zweiten Transportnutzungsbedingung bei Detektion eines Ablaufs des Timers 140, basierend auf der ersten Transportnutzungsbedingung. Insbesondere ist nach der Änderung wieder nur die Verknüpfung zwischen der elektronischen Mediumkennung und der ersten Transportnutzungsbedingung gültig (bis zum Empfang des nächsten Änderungsdatensatzes für diese elektronische Mediumkennung).

Alternativ oder zusätzlich kann ein Änderungsdatensatz optional mindestens eine Fahrtanzahl (z.B. 10) enthalten, die die Anzahl an Fahrten (zwischen einem Check-In und einem Check-Out) angibt, für die die zweite Transportnutzungsbedingung gültig ist. Das Zählmodul 132 ist insbesondere eingerichtet zum Setzen des Zählers 144 entsprechend der in dem Änderungsdatensatz enthaltenen Fahrtanzahl.

Das Änderungsmodul 126 kann eingerichtet sein zum Ändern der Verknüpfung zwischen der in dem identifizierten Nutzerdatensatz gespeicherten elektronischen Mediumkennung und der zweiten Transportnutzungsbedingung bei Detektion eines Ablaufs des Zählers 144, basierend auf der ersten Transportnutzungsbedingung. Insbesondere ist nach der Änderung wieder nur die Verknüpfung zwischen der elektronischen Mediumkennung und der ersten Transportnutzungsbedingung gültig (bis zum Empfang des nächsten Änderungsdatensatzes für diese elektronische Mediumkennung). Wenn also der Zähler 144 in dem oben genannten Beispiel die 10 erreicht hat (oder von der 10 auf null heruntergezählt hat), kann das Änderungsmodul 126 die Verknüpfung ändern, wie beschrieben.

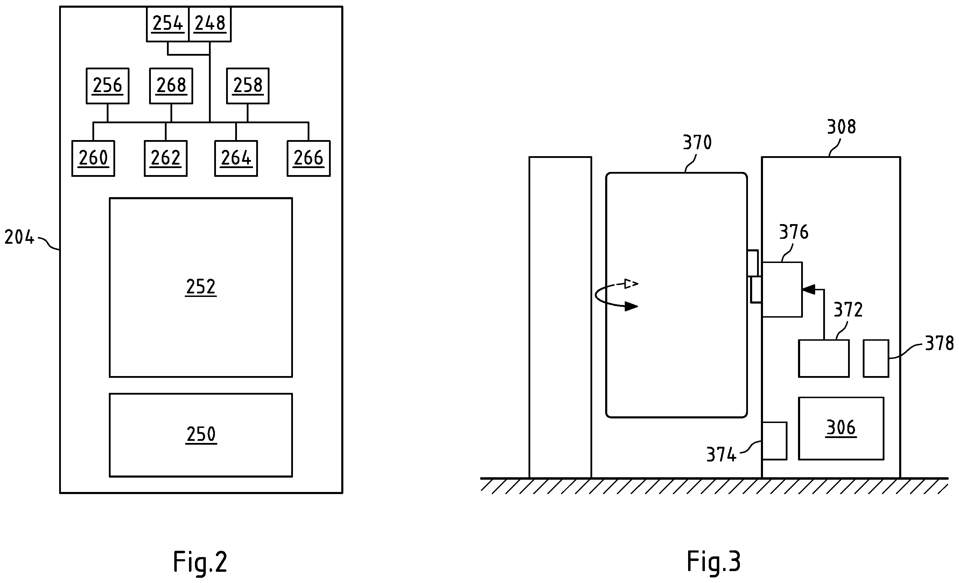

Die Figur 2 zeigt eine schematische Ansicht eines Ausführungsbeispiels einer Schnittstellenvorrichtung 204 insbesondere in Form einer Entwertervorrichtung 204, wie sie beispielsweise in dem Personentransportsystem 100 nach Figur 1 eingesetzt werden kann.

Wie bereits beschrieben wurde, umfasst die Entwertervorrichtung 204 mindestens ein Erfassungsmodul 250 (z.B. eine Nahfeldschnittstelle 250) zum Erfassen der elektronischen Mediumkennung eines in die Lesereichweite des Erfassungsmoduls 250 gehaltenes Ticketmediums. Durch das Erfassen der elektronischen Mediumkennung kann beispielsweise ein Entwerten des Ticketmediums erfolgen und ein Check-In Datensatz generiert werden.

Die Entwertervorrichtung 204 umfasst mindestens ein Detektionsmodul 256. Das Detektionsmodul 256 ist insbesondere eingerichtet zum Detektieren einer über eine Nutzerschnittstelle 252 (vorliegend beispielhaft ein Touchdisplay 252) bestimmten und mit der erfassten Mediumkennung verknüpfbaren zweiten Transportnutzungsbedingung. Insbesondere kann auf der Nutzerschnittstelle 252 eine Auswahl an unterschiedlichen und verfügbaren zweiten Transportnutzungsbedingungen angezeigt werden, wie z.B. zusätzliche Nutzer, zusätzliches Gepäckstück etc. Durch (manuelles) Anwählen über das Touchdisplay 252 kann mindestens eine zweite Transportnutzungsbedingung ausgewählt bzw. bestimmt werden. Dies kann durch das Detektionsmodul 256 detektiert werden.

Ferner verfügt die Entwertervorrichtung 204 vorliegend über mindestens ein Verknüpfungsmodul 258, das eingerichtet ist zum Verknüpfen einer erfassten elektronischen Mediumkennung mit der bestimmten zweiten Transportnutzungsbedingung. Ein Verknüpfen erfolgt insbesondere dadurch, dass (unmittelbar (z.B.: zwischen 1 s und 20 s)) nach einer Auswahl bzw. Bestimmung der mindestens einen zweiten Transportnutzungsbedingung über die Nutzerschnittstelle 252 durch das Erfassungsmodul 250, diese erfasste elektronische Mediumkennung mit der bestimmten zweiten Transportnutzungsbedingung durch das Verknüpfungsmodul 258 verknüpft wird.

Ferner ist mindestens ein Generierungsmodul 260 vorgesehen. Das Generierungsmodul 260 ist eingerichtet zum Generieren des Änderungsdatensatzes, enthaltend die erfasste elektronische Mediumkennung, die mit der erfassten elektronischen Mediumkennung verknüpfte zweite Transportnutzungsbedingung und mindestens ein erstes Zeitdatum. Dieser Änderungsdatensatz ist insbesondere ein Check-In Datensatz.

Das mindestens eine Sendemodul 254 der Entwertervorrichtung 204 ist eingerichtet zum Senden des generierten Änderungsdatensatzes an ein Hintergrundsystem (z.B. 102) des Personentransportsystems.

Optional kann eine Entwertervorrichtung 204 mindestens ein weiteres Modul 248, 262, 264, 266, 268 umfassen. Insbesondere kann die Entwertervorrichtung 204 neben einem Sendemodul 254 mindestens ein Empfangsmodul 248 umfassen. Insbesondere kann mindestens ein kann mindestens ein bidirektionales (Fern-) Kommunikationsmodul zum Senden und Empfangen von Daten vorgesehen sein. Es versteht sich, dass zwei oder mehr Kommunikationsmodule für unterschiedliche Kommunikationstechnologien vorgesehen sein können.

Darüber hinaus kann die Schnittstellenvorrichtung 204 optional ein Prüfmodul 262 und ein Freigabemodul 264 umfassen. Das Prüfmodul 262 ist eingerichtet zum Prüfen einer Zulässigkeit einer jeweils erfassten elektronischen Mediumkennung, basierend auf einem (durch das Prüfmodul 262 oder einem (nicht gezeigten) Prüfmodul des Hintergrundsystems durchgeführten) Vergleich der erfassten elektronischen Mediumkennung mit einer Mehrzahl an in einer Negativliste gespeicherten elektronischen Mediumkennungen, wie bereits beschrieben wurde.

Das Freigabemodul 264 kann eingerichtet sein zum Freigeben eines Passierens der Schnittstellenvorrichtung 204, wenn die erfasste elektronische Mediumkennung eine zulässige elektronische Mediumkennung ist. Eine Freigabe kann beispielsweise durch die Nutzerschnittstelle 252 angezeigt werden.

Das Freigabemodul 264 kann zum Verweigern eines Passierens der Schnittstellenvorrichtung eingerichtet sein, wenn die erfasste elektronische Mediumkennung eine nicht-zulässige elektronische Mediumkennung ist. Eine Sperrung kann beispielsweise durch die Nutzerschnittstelle 252 angezeigt werden.

Alternativ oder zusätzlich kann eine Entwertervorrichtung 204 vorzugsweise über einen (lokalen) Datenspeicher 266 verfügen. Der Datenspeicher 266 kann eingerichtet sein zum Speichern von empfangenen Änderungsdatensätzen mindestens einer weiteren (nicht gezeigten) Entwertervorrichtung und insbesondere der generierten Änderungsdatensätze.

Das Prüfmodul 262 kann alternativ oder zusätzlich eingerichtet sein zum Prüfen der Zulässigkeit der erfassten elektronischen Mediumkennung, basierend auf einem Vergleich der erfassten elektronischen Mediumkennung mit der elektronischen Mediumkennung des mindestens einen gespeicherten Änderungsdatensatzes.

Das Freigabemodul kann alternativ oder zusätzlich eingerichtet sein zum Freigeben eines Passierens der Schnittstellenvorrichtung 204, wenn die erfasste elektronische Mediumkennung zu der mindestens einen gespeicherten elektronischen Mediumkennung korrespondiert. Dies kann beispielsweise durch die Nutzerschnittstelle 252 angezeigt werden.

Das Freigabemodul 264 kann zum Verweigern eines Passierens der Schnittstellenvorrichtung eingerichtet sein, wenn die erfasste elektronische Mediumkennung zu der mindestens einen gespeicherten elektronischen Mediumkennung nicht korrespondiert. Dies kann beispielsweise durch die Nutzerschnittstelle 252 angezeigt werden.

Wie bereits beschrieben wurde, kann der Datenspeicher 266 zum Speichern der generierten und/oder empfangenen Änderungsdatensätze eingerichtet sein. Zusätzlich kann insbesondere der mindestens eine Check-In Datensatz in dem Datenspeicher 266 gespeichert sein/werden. Der Datenspeicher 266 kann zum Bereitstellen, beispielsweise über eine weitere Schnittstelle 268, des mindestens einen Änderungsdatensatzes und/oder des mindestens einen Check-In Datensatzes eingerichtet sein, derart, dass die genannten Datensätze von einer (nicht gezeigten) Inspektionsvorrichtung über ein (nicht gezeigtes) Datennetz empfangbar sind.

Wie bereits beschrieben wurde, kann die Inspektionsvorrichtung sämtliche erfasste (und insbesondere noch nicht als wieder abgemeldet bzw. ausgecheckt geltende) elektronische Mediumkennungen auslesen und lokal in der Inspektionsvorrichtung speichern. Mit anderen Worten, sämtliche Mediumkennungen von ordnungsgemäß entwerteten Ticketmedien können durch die Entwertervorrichtung 204 an die Inspektionsvorrichtung übertragen werden. Dann können sämtliche (augenblickliche) Nutzer des Transportfahrzeugs überprüft werden, in dem deren jeweiliges Ticketmedium durch die Inspektionsvorrichtung ausgelesen wird, also die jeweilige elektronische Mediumkennung durch die Inspektionsvorrichtung erfasst wird, und mit den lokal gespeicherten (zulässigen) elektronischen Mediumkennungen verglichen wird. Wenn festgestellt wird, dass keine Korrespondenz zwischen einer erfassten und einer lokal in der Inspektionsvorrichtung gespeicherten Mediumkennung besteht, kann davon ausgegangen werden, dass der Nutzer keine Berechtigung zur Nutzung des Transportfahrzeugs besitzt. Indem zusätzlich zweite Transportnutzungsbedingungen durch die Inspektionsvorrichtung aus der Entwertervorrichtung 204 ausgelesen werden, kann auch die Berechtigung weiterer Nutzer und/oder Gegenstände in einfacher Weise (durch einen Inspektor) geprüft werden.

Die Figur 3 zeigt eine schematische Ansicht eines Ausführungsbeispiels einer Durchgangssperre 308 gemäß der vorliegenden Anmeldung, insbesondere mit einer Schnittstellenvorrichtung 306. Die Schnittstellenvorrichtung 306 kann vorzugsweise gemäß der Schnittstellenvorrichtung 204 der Figur 2 gebildet sein.

Die Durchgangssperre 308 weist ein bewegliches Sperrelement 370 (insbesondere eine Tür 370) auf. Vorliegend kann das Sperrelement 370 durch einen Aktor 376, der in einer Basis der Durchgangssperre 308 angeordnet sein kann, zwischen einer Freigabeposition und einer in der Figur 3 gezeigten Sperrposition bewegt bzw. verfahren werden.

Insbesondere kann die Durchgangssperre 308 über ein lokales Steuermodul 372 verfügen, insbesondere eingerichtet zum Ansteuern des Aktors 376. Insbesondere kann das Steuermodul 372 eingerichtet sein zum Steuern des Bewegens des Sperrelements (insbesondere durch Ansteuern des Aktors 376) zwischen der Sperrposition und der Freigabeposition. Beispielsweise kann ein Freigabemodul der Schnittstellenvorrichtung 306 mit dem Steuermodul 372 gekoppelt sein. Das Freigabemodul kann, wie beschrieben wurde, ein Freigeben und Verweigern des Passierens der Durchgangssperre 308 veranlassen. Abhängig von der Vorgabe des Freigabemoduls kann ein Bewegen des Sperrelements 370 durch das Steuermodul 372 bewirkt bzw. gesteuert werden (oder unterbleiben).

Das Steuern basiert vorzugsweise auf der mit der erfassten elektronischen Mediumkennung verknüpften (ersten und/oder zweiten) Transportnutzungsbedingung. Das Steuermodul 372 kann insbesondere eingerichtet sein zum Halten des Sperrelements 370 in der Freigabeposition für eine Freigabezeitdauer. Die Länge der Freigabezeitdauer kann auf der mit der erfassten elektronischen Mediumkennung verknüpften (zweiten) Transportnutzungsbedingung basieren. Insbesondere kann bei der ersten Transportnutzungsbedingung eine Standard-Freigabezeitdauer vorgesehen sein, die abhängig von der zweiten Transportnutzungsbedingung verlängert werden kann.

Optional kann die Durchgangssperre 308 mindestens einen Sensor 374 umfassen, beispielsweise in Form einer Lichtschranke. Der Sensor 374 kann eingerichtet sein zum Detektieren von Passagen durch die Durchgangssperre 308 in der Freigabeposition des Sperrelements 370. Insbesondere kann eine zweite Transportnutzungsbedingung als Gültigkeitsumfang einer einzelnen durch die Schnittstellenvorrichtung 306 erfassten elektronischen Mediumkennung eine bestimmte Anzahl n_{N} an Nutzern festlegen (bei der ersten Transportnutzungsbedingung kann (standardmäßig) n_{N} = 1 sein).

Das Steuermodul 372 kann eingerichtet sein zum Bewegen des Sperrelements 370 von der Freigabeposition in die Sperrposition bei bzw. (unmittelbar) nach einer Detektion einer Anzahl n_{P} von Passagen, die der bestimmten Anzahl n_{N} von Nutzern entspricht, wie bereits beschrieben wurde.

Insbesondere zusätzlich kann die Durchgangssperre 308 mindestens einen nach jeder detektierten Passage startbaren Timer 378 umfassen. Das Steuermodul 372 kann eingerichtet sein zum Bewegen des Sperrelements 370 von der Freigabeposition in die Sperrposition (stets) bei Ablauf des Timers 378.

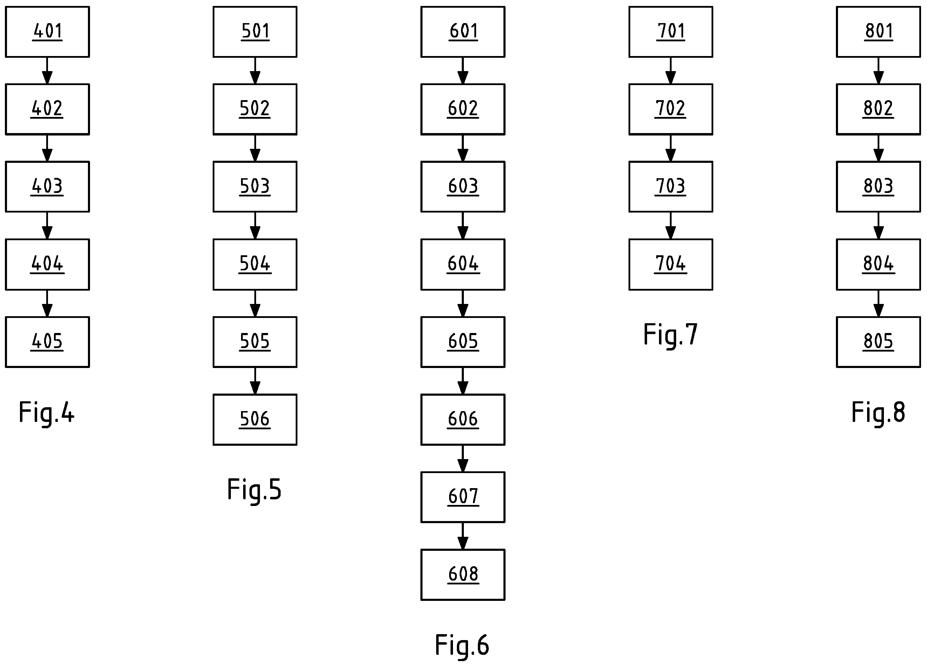

Die Figur 4 zeigt ein Ausführungsbeispiel eines Verfahrens gemäß der vorliegenden Anmeldung zum Betreiben eines Hintergrundsystems (z.B. das Hintergrundsystem 102 gemäß der Figur 1) eines Personentransportsystems.

In einem Schritt 401 erfolgt ein Speichern mindestens eines Nutzerdatensatzes, enthaltend zumindest eine zur Durchführung einer Transportfahrt (mit einem Personentransportfahrzeug) berechtigende elektronische Mediumkennung und mindestens eine mit der elektronischen Mediumkennung verknüpfte erste Transportnutzungsbedingung, wie beschrieben wurde.

In Schritt 402 erfolgt ein Empfangen eines von einer Schnittstellenvorrichtung des Personentransportsystems generierten Änderungsdatensatzes, enthaltend mindestens eine zweite Transportnutzungsbedingung, mindestens ein erstes Zeitdatum und mindestens eine Nutzerkennung zum Identifizieren eines gespeicherten Nutzerdatensatzes, wie beschrieben wurde.

In Schritt 403 erfolgt ein Ändern der Verknüpfung zwischen der in dem identifizierten Nutzerdatensatz gespeicherten elektronischen Mediumkennung und der ersten Transportnutzungsbedingung für mindestens eine zukünftige Transportfahrt, basierend auf der empfangenen zweiten Transportnutzungsbedingung, wie beschrieben wurde.

In Schritt 404 erfolgt ein Rekonstruieren einer durchgeführten Transportfahrt, zumindest basierend auf einem von einer Entwertervorrichtung des Personentransportsystem empfangenen Check-In Datensatz, enthaltend zumindest die elektronische Mediumkennung, und einem bereitgestellten Check-Out Datensatz, enthaltend zumindest die elektronische Mediumkennung, wie beschrieben wurde.

In Schritt 405 erfolgt ein Generieren eines Abrechnungsdatensatzes, zumindest basierend auf der rekonstruierten Transportfahrt und einer mit der elektronischen Mediumkennung verknüpften Transportnutzungsbedingung des Nutzerdatensatzes. Dann kann der Abrechnungsdatensatz beispielsweise an den Nutzer versendet werden, wie beschrieben wurde.

In den Figuren 5 bis 8 werden beispielhafte Anwendungsfälle bzw. Verfahren gezeigt.

In dem Anwendungsfall nach Figur 5 kann mindestens eine Entwertervorrichtung (z.B. wie in Figur 2) in einem Transportfahrzeug (z.B. Bus, Straßenbahn, U-Bahn, S-Bahn, Fähre, ...) angeordnet sein, die insbesondere bestimmungsgemäß unmittelbar nach Betreten des Fahrzeugs durch einen Nutzer benutzt werden soll.

Alternativ oder zusätzlich kann mindestens eine Entwertervorrichtung (z.B. wie in Figur 2) in einem Haltestellenbereich bzw. an einem Haltepunkt (z.B. Bahnhofshalle, Bahnsteig, Haltstelle) angeordnet sein, die insbesondere bestimmungsgemäß vor dem Betreten des Fahrzeugs oder vor dem Betreten des Einstiegbereichs durch einen Nutzer benutzt werden soll. In diesem Fall kann beispielsweise eine Gruppe von Nutzern das Transportfahrzeug nutzen wollen.

In einem ersten Schritt 501 kann einer der Nutzer der Gruppe über eine Nutzerschnittstelle der Entwertervorrichtung eine zweite Transportnutzungsbedingung bestimmen bzw. auswählen, um insbesondere den Gültigkeitsumfang für den nächsten "Tap" mit seinem Ticketmedium auszuwählen. Beispielsweise kann an einem Touchdisplay mit Plus/Minus-Tasten folgende zweite Transportnutzungsbedingung bestimmt bzw. ausgewählt werden:

| | | |
|---|---|---|
| + | ERWACHSENER | - |
| + | KIND | - |
| + | FAHRRAD | - |
| + | HUND | - |

Die bestimmte zweite Transportnutzungsbedingung kann durch ein Detektionsmodul detektiert werden.

In einem unmittelbar an den Schritt 501 anschließenden Schritt 502 kann der Nutzer danach an der Entwertervorrichtung einen Check-In für die gesamte Gruppe durch einen einzelnen Tap bewirken, also durch ein Erfassen der elektronischen Mediumkennung seines Ticketmediums.

In Schritt 503 erfolgt ein Verknüpfen der detektierten zweiten Transportnutzungsbedingung mit der erfassten elektronischen Mediumkennung. Insbesondere kann die Entwertervorrichtung einen einzigen Änderungsdatensatz bzw. Entwertungsdatensatz generieren und speichern, der gegenüber einem herkömmlichen Check-In Datensatz insbesondere Zusatzdaten über den aktuell gewählten Gültigkeitsumfang enthalten kann. In einem Schritt 504 kann dieser Datensatz an das Hintergrundsystem gesendet werden.

Dann kann die Gruppe zu ihrem Fahrtziel fahren. Falls ein Check-Out nötig ist, kann mit einem einzigen Tap die gesamte Gruppe ausgecheckt werden und insbesondere ein entsprechender Check-Out Datensatz generiert und versendet werden. Falls dieselbe Gruppe in identischer Besetzung die Fahrt fortsetzen möchte, muss in diesem beispielhaften Anwendungsfall beim nächsten Check-In vor dem "Tap" wieder dieselbe zweite Transportnutzungsbedingung ausgewählt werden. Falls die Gruppe in geänderter Besetzung die Fahrt fortsetzen möchte, muss in diesem beispielhaften Anwendungsfall beim nächsten Check-In vor dem "Tap" eine andere zweite Transportnutzungsbedingung ausgewählt werden.

Das Hintergrundsystem rekonstruiert gemäß den empfangenen Datensätzen in Schritt 505 die mindestens eine durchgeführte Transportfahrt und verrechnet diese mindestens eine Fahrt insbesondere entsprechend der zweiten Transportnutzungsbedingung mit dem Zahlmittel, das zu dem Kundenkonto hinterlegt ist, das der verwendeten elektronischen Mediumkennung zugeordnet ist (Schritt 506).

Das Hintergrundsystem kann optional mindestens eine Mitteilung über die gewählte zweite Transportnutzungsbedingung senden, zum Beispiel an ein mobiles Endgerät bzw. eine App auf dem mobilen Endgerät des Nutzers, an eine in dem Kundenkonto hinterlegte Mobilfunknummer und/oder an eine zum Kundenkonto hinterlegte E-Mail-Adresse.

In dem Anwendungsfall nach Figur 6 kann mindestens eine Entwertervorrichtung (z.B. wie in Figur 2) in einem Transportfahrzeug (z.B. Bus, Straßenbahn, U-Bahn, S-Bahn, Fähre, ...) angeordnet sein, die insbesondere bestimmungsgemäß unmittelbar nach Betreten des Fahrzeugs durch einen Nutzer benutzt werden soll. Alternativ oder zusätzlich kann mindestens eine Entwertervorrichtung (z.B. wie in Figur 2) in einem Haltestellenbereich bzw. an einem Haltepunkt (z.B. Bahnhofshalle, Bahnsteig, Haltstelle) angeordnet sein, die insbesondere bestimmungsgemäß vor dem Betreten des Fahrzeugs oder vor dem Betreten des Einstiegbereichs durch einen Nutzer benutzt werden soll. In diesem Fall kann beispielsweise eine Gruppe von Nutzern das Transportfahrzeug nutzen wollen.

Einer der Nutzer der Gruppe verwendet vorliegend eine weitere Schnittstellenvorrichtung des Personentransportsystems in einem ersten Schritt 601 zum Bestimmen eines zweiten Transportnutzungsbedingung, um den Gültigkeitsumfang für den nächsten "Tap" mit seinem Ticketmedium vorauszuwählen. Die weitere Schnittstellenvorrichtung des Personentransportsystems kann beispielsweise sein:
- eine spezielle Entwertervorrichtung mit einer angepassten "Voreinstellungsanwendung",
- ein Fahrkartenautomat mit einer zusätzlichen Funktion,
- eine z.B. über ein mobiles Endgerät aufrufbare Website,
- eine auf dem mobilen Endgerät gespeicherte App.

Der Nutzer kann sein Ticketmedium bzw. die darin gespeicherte elektronische Mediumkennung für die Identifikation seines Nutzerkontos nutzen oder eine andere Nutzerkennung (z.B. kann der Nutzer Zugangsdaten für ein Nutzerkonto eingeben). Dann kann der Nutzer in einem Schritt 602 über eine Nutzerschnittstelle der weiteren Schnittstellenvorrichtung eine zweite Transportnutzungsbedingung bestimmen bzw. auswählen, um insbesondere den Gültigkeitsumfang für den nächsten "Tap" mit seinem Ticketmedium auszuwählen. Beispielsweise kann an einem Touchdisplay mit Plus/Minus-Tasten folgende zweite Transportnutzungsbedingung bestimmt werden:

| | | |
|---|---|---|
| + | ERWACHSENER | - |
| + | KIND | - |
| + | FAHRRAD | - |
| + | HUND | - |

Die bestimmte zweite Transportnutzungsbedingung kann durch ein Detektionsmodul detektiert werden.

In Schritt 603 kann ein Änderungsdatensatz an das Hintergrundsystem gesendet werden. Das Hintergrundsystem kann den Änderungsdatensatz speichern und insbesondere in Schritt 604 die Verknüpfung zwischen der in dem identifizierten Nutzerdatensatz gespeicherten elektronischen Mediumkennung und der ersten Transportnutzungsbedingung für mindestens eine zukünftige Transportfahrt ändern, basierend auf der empfangenen zweiten Transportnutzungsbedingung.

Dann kann der Nutzer an einer Entwertervorrichtung einen Check-In für die gesamte Gruppe mit einem einzigen "Tap" seines Ticketmediums durchführen.

Die Entwertervorrichtung kann in Schritt 605 einen Check-In Datensatz generieren und beispielsweise speichern. Der Check-In Datensatz enthält insbesondere keine Zusatzdaten über den aktuell gewählten Gültigkeitsumfang. In Schritt 606 kann der Check-In Datensatz an das Hintergrundsystem gesendet werden.

Das Hintergrundsystem kann den Check-In Datensatz speichern und verknüpft ihn mit der gespeicherten zweiten Transportnutzungsbedingung. Optional kann das Hintergrundsystem einen Änderungsdatensatz mit der zweiten Transportnutzungsbedingung an die mindestens eine Entwertervorrichtung senden.

Dann kann die Entwertervorrichtung die gewählte zweite Transportnutzungsbedingung unmittelbar nach der Erfassung der elektronischen Mediumkennung anzeigen. Die Entwertervorrichtung kann die genannten Datensätze speichern, insbesondere für einen zuvor beschriebenen Inspektionsprozess.

Das Hintergrundsystem rekonstruiert gemäß den empfangenen Datensätzen in Schritt 607 die mindestens eine durchgeführte Fahrt und verrechnet diese mindestens eine Fahrt insbesondere entsprechend der zweiten Transportnutzungsbedingung mit dem Zahlmittel, das zu dem Kundenkonto hinterlegt ist, das der verwendeten elektronischen Mediumkennung zugeordnet ist (Schritt 608).

Das Hintergrundsystem kann optional mindestens eine Mitteilung über die gewählte zweite Transportnutzungsbedingung senden, zum Beispiel an ein mobiles Endgerät bzw. eine App auf dem mobilen Endgerät des Nutzers, an eine in dem Kundenkonto hinterlegte Mobilfunknummer und/oder an eine zum Kundenkonto hinterlegte E-Mail-Adresse.

In dem Anwendungsfall nach Figur 7 kann mindestens eine Durchgangssperre (z.B. wie in Figur 3) und/oder mindestens ein Durchgangssperren-Array mit einer Mehrzahl von Durchgangssperren (z.B. wie in Figur 3) in einem Haltestellenbereich bzw. an einem Haltepunkt (z.B. Bahnhofshalle, Bahnsteig, Haltstelle) angeordnet sein, wobei die Durchgangssperre bestimmungsgemäß vor dem Betreten eines Transportfahrzeugs und/oder vor dem Betreten des Einstiegbereichs benutzt werden soll. Wiederum kann beispielhaft eine Gruppe von Nutzern das mindestens eine Transportfahrzeug nutzen wollen.

In einem ersten Schritt 701 kann einer der Nutzer über eine Nutzerschnittstelle der Schnittstellenvorrichtung (z.B. eine Entwertervorrichtung) der Durchgangsperre eine zweite Transportnutzungsbedingung bestimmen bzw. auswählen, um insbesondere den Gültigkeitsumfang für den nächsten "Tap" mit seinem Ticketmedium auszuwählen. Beispielsweise kann an einem Touchdisplay mit Plus/Minus-Tasten folgende zweite Transportnutzungsbedingung bestimmt werden:

| | | |
|---|---|---|
| + | ERWACHSENER | - |
| + | KIND | - |
| + | FAHRRAD | - |
| + | HUND | - |

Die bestimmte zweite Transportnutzungsbedingung kann durch ein Detektionsmodul detektiert werden.

In einem unmittelbar an den Schritt 701 anschließenden Schritt 702 kann der Nutzer danach an der Entwertervorrichtung einen Check-In für die gesamte Gruppe durch einen einzelnen Tap bewirken, also durch ein Erfassen der elektronischen Mediumkennung seines Ticketmediums.

In Schritt 703 erfolgt ein Verknüpfen der detektierten zweiten Transportnutzungsbedingung mit der erfassten elektronischen Mediumkennung. Insbesondere kann die Schnittstellenvorrichtung einen einzigen Änderungsdatensatz bzw. Entwertungsdatensatz generieren und speichern, der gegenüber einem herkömmlichen Check-In Datensatz insbesondere Zusatzdaten über den aktuell gewählten Gültigkeitsumfang enthalten kann.

Die Durchgangssperre gibt dann seinen Zugang frei für die Anzahl n_{N} der vorausgewählten Reisenden. Es erfolgt insbesondere ein Öffnen des wenigstens einen Sperrelements und das Ermöglichen von n_{P} Passagen, detektierbar durch mindestens einen Sensor der Durchgangssperre. Insbesondere kann vorgesehen sein, dass solange weniger als n_{P} Passagen von dem mindestens einen Sensor detektiert sind, nach jeder Passage ein Timer der Durchgangssperre gestartet wird (z.B. 10 bis 15 Sekunden). Wenn nicht innerhalb des Timer-Ablaufs die nächste Passage beginnt, wird das Sperrelement in die Sperrposition bewegt. Nach dem Detektieren von n_{P} Passagen kann das Sperrelement in die Sperrposition bewegt werden. Alternativ oder zusätzlich kann ein besonders langsames Schließen des wenigstens einen Sperrelements erfolgen, z.B. abhängig von den ausgewählten zusätzlichen Personen oder Gegenständen (z.B. wenn Kinder oder Hunde vor-ausgewählt wurden).

In einem Schritt 704 kann der in Schritt 703 generierte Datensatz an das Hintergrundsystem gesendet werden. Dann kann entsprechend Schritt 505 der Figur 5 das Verfahren fortgesetzt werden.

In dem Anwendungsfall nach Figur 8 kann mindestens eine Durchgangssperre (z.B. wie in Figur 3) und/oder mindestens ein Durchgangssperren-Array mit einer Mehrzahl von Durchgangssperren (z.B. wie in Figur 3) in einem Haltestellenbereich bzw. an einem Haltepunkt (z.B. Bahnhofshalle, Bahnsteig, Haltstelle) angeordnet sein, wobei die Durchgangssperre bestimmungsgemäß vor dem Betreten eines Transportfahrzeugs und/oder vor dem Betreten des Einstiegbereichs benutzt werden soll. Wiederum kann beispielhaft eine Gruppe von Nutzern das mindestens eine Transportfahrzeug nutzen wollen.

Wie in Figur 6 kann einer der Nutzer eine weitere Schnittstellenvorrichtung in Schritt 801 verwenden zum Bestimmen eines zweiten Transportnutzungsbedingung, um den Gültigkeitsumfang für den nächsten "Tap" mit seinem Ticketmedium vorauszuwählen.

Wie in Figur 6 kann die weitere Schnittstellenvorrichtung den Änderungsdatensatz für den nächsten "Tap" mit dem entsprechenden Ticketmedium an das Hintergrundsystem senden (Schritt 802).

Darüber hinaus kann, entsprechend Figur 6, das Hintergrundsystem den Änderungsdatensatz für den nächsten Tap mit der Mediumkennung verknüpfen und insbesondere speichern. Dann kann der Änderungsdatensatz gesendet werden und vom Hintergrundsystem in zuvor beschriebener Weise gespeichert werden (Schritt 803)

Das Hintergrundsystem kann den empfangenen Änderungsdatensatz an vorzugsweise sämtliche Durchgangssperren übersenden (das erfolgt insbesondere innerhalb weniger Sekunden (z.B. < 3 Sekunden) nach einem Empfang) (Schritt 804).

Der Nutzer kann danach an der Durchgangssperre in Schritt 805 einen Check-In für die gesamte Gruppe mit einem einzigen "Tap" seines Ticketmediums durchführen. Dann kann die Durchgangssperre entsprechend der Figur 7 die Durchgangssperre freigeben, und das Verfahren kann entsprechend Figur 7 fortgesetzt werden.

Wie bereits beschrieben wurde, kann anmeldungsgemäß optional ein Inspektionsprozess durchgeführt werden. Um eine Inspektion insbesondere von zuvor beschriebenen Open-Payment-Ticketmedien durchzuführen (d.h. zu überprüfen, ob jeder Fahrgast sein Ticketmedium vor einem Betreten des Transportfahrzeugs an einer Entwertervorrichtung getappt bzw. entwertet hat), kann ein Kontrolleur durch einen Tap mit einer "Inspection Card" (auch als Inspektionselement bezeichnet) eine Entwertervorrichtung in einem Transportfahrzeug veranlassen, insbesondere über ein (geschütztes) Datennetz in Form eines (geschützten) WLAN, die aktuelle Mediumkennungsliste der entwerteten Ticketmedien an eine Inspektionsvorrichtung des Inspektors zu senden.

Bei einem nachfolgenden Inspektionsprozess kann die Inspektionsvorrichtung eine elektronische Mediumkennung eines zu inspizierendes Ticketmediums eines Nutzers erfassen bzw. einlesen, um zu verifizieren, ob die eingelesene elektronische Mediumkennung auf der aktuellen Mediumkennungsliste steht, wie bereits beschrieben wurde.

Beispielsweise gemäß dem ersten Anwendungsfall kann die aktuelle Mediumkennungsliste einer Entwertervorrichtung auch die Zusatzdaten bzw. die zweiten Transportnutzungsbedingungen über den aktuell gewählten Gültigkeitsumfang eines verwendeten Ticketmediums umfassen, also insbesondere: Wie viele zahlungspflichtige Personen und Gegenstände auf einem Tap mitfahren. Diese Angaben kann die Inspektionsvorrichtung aus der Mediumkennungsliste entnehmen und beispielsweise dem Inspektor anzeigen.

Gemäß dem Anwendungsfall nach Figur 6 kann die aktuelle Mediumkennungsliste einer Entwertervorrichtung nicht die Zusatzdaten über den aktuell gewählten Gültigkeitsumfang eines verwendeten Ticketmediums enthalten, also insbesondere keine Angaben darüber, dass mehrere zahlungspflichtige Personen und Gegenstände auf einem Tap mitfahren. Diese Angaben kann die Inspektionsvorrichtung für einen aktuellen Inspektionsprozess über ein Fernkommunikationsnetz am Hintergrundsystem angefragt werden.

Abschließend sein angemerkt, dass ein Mehrfach-Tappen für eine Mehrzahl an Nutzern in der Praxis keine bevorzugte Lösung, da es die häufig gültigen Anti-Passback-Regeln verletzt, nicht erlaubt, andere Tarife zu aktivieren (Kindertarif, etc.) und insbesondere zu Bedienfehlern führt, da es für den Nutzer nicht immer klar ist, wie oft er nun wirklich kontaktlos "getappt" hat.

### Bezugszeichenliste

- 100: Personentransportsystem
- 102: Hintergrundsystem
- 104: Schnittstellenvorrichtung, insbesondere Entwertervorrichtung,
- 106: Schnittstellenvorrichtung
- 108: Durchgangssperre
- 110: Schnittstellenvorrichtung, insbesondere Fahrkartenautomat
- 112: Schnittstellenvorrichtung, insbesondere mobiles Endgerät
- 114: Ticketmedium
- 116: Nutzer
- 118: Speichermittel
- 120: Transportfahrzeug
- 122: Ausgangsbereich bzw. Eingangsbereich
- 124: Datenspeicher
- 126: Änderungsmodul
- 128: Fahrtrekonstruktionsmodul
- 130: Generierungsmodul
- 132: Zählmodul
- 134: Empfangsmodul
- 136: Sendemodul
- 138: Zeitmodul
- 140: Timer
- 142: Haltestellenbereich
- 144: Zähler
- 204: Schnittstellenvorrichtung, insbesondere Entwertervorrichtung
- 248: Empfangsmodul
- 250: Erfassungsmodul
- 252: Nutzerschnittstelle, insbesondere Touchdisplay
- 254: Sendemodul
- 256: Detektionsmodul
- 258: Verknüpfungsmodul
- 260: Generierungsmodul
- 262: Prüfmodul
- 264: Freigabemodul
- 266: Datenspeicher
- 268: Schnittstelle
- 306: Schnittstellenvorrichtung
- 308: Durchgangssperre
- 370: Sperrelement
- 372: Steuermodul
- 374: Sensor
- 376: Aktor
- 378: Timer

## Patentansprüche

1. Hintergrundsystem (102) für ein Personentransportsystem (100), umfassend:
- mindestens einen Datenspeicher (124), eingerichtet zum Speichern mindestens eines Nutzerdatensatzes, enthaltend zumindest eine zur Durchführung einer Transportfahrt berechtigende elektronische Mediumkennung und mindestens eine mit der elektronischen Mediumkennung verknüpfte erste Transportnutzungsbedingung,
- mindestens ein Empfangsmodul (134), eingerichtet zum Empfangen eines von einer Schnittstellenvorrichtung (104, 106, 110, 112, 204, 306) des Personentransportsystems (100) generierten Änderungsdatensatzes, enthaltend mindestens eine zweite Transportnutzungsbedingung, mindestens ein erstes Zeitdatum und mindestens eine Nutzerkennung zum Identifizieren eines gespeicherten Nutzerdatensatzes,
- mindestens ein Änderungsmodul (126), eingerichtet zum Ändern der Verknüpfung zwischen der in dem identifizierten Nutzerdatensatz gespeicherten elektronischen Mediumkennung und der ersten Transportnutzungsbedingung für mindestens eine zukünftige Transportfahrt, basierend auf der empfangenen zweiten Transportnutzungsbedingung,
- mindestens ein Fahrtrekonstruktionsmodul (128), eingerichtet zum Rekonstruieren einer durchgeführten Transportfahrt, zumindest basierend auf einem von einer Entwertervorrichtung (104, 106, 204, 306) des Personentransportsystem (100) empfangenen Check-In Datensatz, enthaltend zumindest eine elektronische Mediumkennung, und einem bereitgestellten Check-Out Datensatz, enthaltend zumindest dieselbe elektronische Mediumkennung, und
- mindestens ein Generierungsmodul (130), eingerichtet zum Generieren eines Abrechnungsdatensatzes, zumindest basierend auf der rekonstruierten Transportfahrt und der mit der elektronischen Mediumkennung verknüpften Transportnutzungsbedingung des Nutzerdatensatzes.

2. Hintergrundsystem (102) nach Anspruch 1, **dadurch gekennzeichnet, dass**
- das Hintergrundsystem (102) ein Sendemodul (136) umfasst, eingerichtet zum Senden einer Änderungsnachricht über die mindestens eine zweite Transportnutzungsbedingung an die Schnittstellenvorrichtung (104, 106, 110, 112, 204, 306) nach einer Änderung der Verknüpfung, und/oder
- das Hintergrundsystem (102) ein Sendemodul (136) umfasst, eingerichtet zum Senden einer Änderungsnachricht über die mindestens eine zweite Transportnutzungsbedingung an eine in dem identifizierten Nutzerdatensatz gespeicherte Kommunikationsadresse nach einer Änderung der Verknüpfung.

3. Hintergrundsystem (102) nach Anspruch 1 oder 2, **dadurch gekennzeichnet, dass**
- der Änderungsdatensatz mindestens ein zweites Zeitdatum enthält, das eine Gültigkeitszeitdauer der zweiten Transportnutzungsbedingung angibt,
- wobei das Hintergrundsystem (102) mindestens ein Zeitmodul (138) umfasst, eingerichtet zum Setzen eines Timers (140) gemäß dem zweiten Zeitdatum, und
- wobei das Änderungsmodul (126) eingerichtet ist zum Ändern der Verknüpfung zwischen der in dem identifizierten Nutzerdatensatz gespeicherten elektronischen Mediumkennung und der zweiten Transportnutzungsbedingung bei Detektion eines Ablaufs des Timers (140), basierend auf der ersten Transportnutzungsbedingung.

4. Hintergrundsystem (102) nach einem der vorherigen Ansprüche, **dadurch gekennzeichnet, dass**
- der Änderungsdatensatz mindestens eine Fahrtanzahl enthält, die die Anzahl an Fahrten angibt, für die die zweite Transportnutzungsbedingung gültig ist,
- wobei das Hintergrundsystem (102) mindestens ein Zählmodul (132) umfasst, eingerichtet zum Setzen eines Zählers (144) entsprechend der Fahrtanzahl, und
- wobei das Änderungsmodul (126) eingerichtet ist zum Ändern der Verknüpfung zwischen der in dem identifizierten Nutzerdatensatz gespeicherten elektronischen Mediumkennung und der zweiten Transportnutzungsbedingung bei Detektion eines Ablaufs des Zählers (144), basierend auf der ersten Transportnutzungsbedingung.

5. Hintergrundsystem (102) nach einem der vorherigen Ansprüche, **dadurch gekennzeichnet, dass**
- das Hintergrundsystem (102) ein Sendemodul (136) umfasst, eingerichtet zum Senden eines empfangenen Änderungsdatensatz an mindestens eine weitere Schnittstellenvorrichtung (104, 106, 110, 112, 204, 306) des Personentransportsystems (100) nach einer Änderung der Verknüpfung.

6. Schnittstellenvorrichtung (104, 106, 110, 112, 204, 306) für ein Personentransportsystem (100), wobei die Schnittstellenvorrichtung (104, 106, 110, 112, 204, 306) in einem Personentransportfahrzeug (120) und/oder in einem Transporthaltestellenbereich (142) anordenbar ist, umfassend:
- mindestens ein Erfassungsmodul (250), eingerichtet zum Erfassen einer elektronischen Mediumkennung eines Ticketmediums, wobei die elektronische Mediumkennung eine zur Durchführung einer Transportfahrt berechtigende und mit einer ersten Transportnutzungsbedingung verknüpfte elektronische Mediumkennung ist,
- mindestens ein Detektionsmodul (256), eingerichtet zum Detektieren einer über eine Nutzerschnittstelle (252) der Schnittstellenvorrichtung (104, 106, 110, 112, 204, 306) bestimmten und mit der erfassten Mediumkennung verknüpfbaren zweiten Transportnutzungsbedingung,
- mindestens ein Verknüpfungsmodul (258), eingerichtet zum Verknüpfen einer erfassten elektronischen Mediumkennung mit der bestimmten zweiten Transportnutzungsbedingung,
- mindestens ein Generierungsmodul (260), eingerichtet zum Generieren eines Änderungsdatensatzes, enthaltend die erfasste elektronische Mediumkennung, die mit der erfassten elektronischen Mediumkennung verknüpfte zweite Transportnutzungsbedingung und mindestens ein erstes Zeitdatum, und
- mindestens ein Sendemodul (254), eingerichtet zum Senden des generierten Änderungsdatensatzes an ein Hintergrundsystem (102) des Personentransportsystems (100), insbesondere an ein Hintergrundsystem (102) nach einem der vorherigen Ansprüche.

7. Schnittstellenvorrichtung (104, 106, 110, 112, 204, 306) nach Anspruch 6,
**dadurch gekennzeichnet, dass**
- die Schnittstellenvorrichtung (104, 106, 110, 112, 204, 306) ein Prüfmodul (262) umfasst, eingerichtet zum Prüfen einer Zulässigkeit der erfassten elektronischen Mediumkennung, basierend auf einem Vergleich der erfassten elektronischen Mediumkennung mit einer Mehrzahl an in einer Negativliste gespeicherten elektronischen Mediumkennungen, und
- die Schnittstellenvorrichtung (104, 106, 110, 112, 204, 306) ein Freigabemodul (264) umfasst, eingerichtet zum Freigeben eines Passierens der Schnittstellenvorrichtung (104, 106, 110, 112, 204, 306), wenn die erfasste elektronische Mediumkennung eine zulässige elektronische Mediumkennung ist.
- wobei das Freigabemodul (264) eingerichtet ist zum Verweigern eines Passierens der Schnittstellenvorrichtung (104, 106, 110, 112, 204, 306), wenn die erfasste elektronische Mediumkennung eine nicht-zulässige elektronische Mediumkennung ist.

8. Schnittstellenvorrichtung (104, 106, 110, 112, 204, 306) nach einem der vorherigen Ansprüche, **dadurch gekennzeichnet dass**
- die Schnittstellenvorrichtung (104, 106, 110, 112, 204, 306) ein Empfangsmodul (248) umfasst, eingerichtet zum Empfangen eines Änderungsdatensatzes von einer weiteren Schnittstellenvorrichtung (104, 106, 110, 112, 204, 306) des Personentransportsystems (100) und/oder von dem Hintergrundsystem (102),
- die Schnittstellenvorrichtung (104, 106, 110, 112, 204, 306) einen Datenspeicher (266) umfasst, eingerichtet zum Speichern des empfangenen Änderungsdatensatzes,
- Schnittstellenvorrichtung (104, 106, 110, 112, 204, 306) ein Prüfmodul (262) umfasst, eingerichtet zum Prüfen der Zulässigkeit der erfassten elektronischen Mediumkennung, basierend auf einem Vergleich der erfassten elektronischen Mediumkennung mit der elektronischen Mediumkennung des gespeicherten Änderungsdatensatzes, und
- die Schnittstellenvorrichtung (104, 106, 110, 112, 204, 306) ein Freigabemodul (264) umfasst, eingerichtet zum Freigeben eines Passierens der Schnittstellenvorrichtung (104, 106, 110, 112, 204, 306), wenn die erfasste elektronische Mediumkennung zu der gespeicherten elektronischen Mediumkennung korrespondiert.

9. Durchgangssperre (308) für ein Personentransportsystem (100),
- umfassend eine Schnittstellenvorrichtung (104, 106, 110, 112, 204, 306) nach einem der vorherigen Ansprüche 5 bis 10,
- mindestens ein zwischen einer Sperrposition und einer Freigabeposition bewegliches Sperrelement (370), und
- mindestens ein Steuermodul (372), eingerichtet zum Steuern des Bewegens des Sperrelements (370) zwischen der Sperrposition und der Freigabeposition.

10. Durchgangssperre (308) nach Anspruch 9, **dadurch gekennzeichnet, dass**
- das Steuermodul (372) eingerichtet ist zum Steuern des Bewegens des Sperrelements (370) zwischen der Sperrposition und der Freigabeposition, basierend auf der mit der erfassten elektronischen Mediumkennung verknüpften Transportnutzungsbedingung.

11. Durchgangssperre (308) nach Anspruch 10, **dadurch gekennzeichnet, dass**
- das Steuermodul (372) eingerichtet ist zum Halten des Sperrelements (370) in der Freigabeposition für eine Freigabezeitdauer,
- wobei die Länge der Freigabezeitdauer basiert auf der mit der erfassten elektronischen Mediumkennung verknüpften Transportnutzungsbedingung.

12. Durchgangssperre (308) nach Anspruch 10 oder 11, **dadurch gekennzeichnet, dass**
- die Durchgangssperre (308) mindestens einen Sensor (374) umfasst, eingerichtet zum Detektieren von Passagen durch die Durchgangssperre in der Freigabeposition des Sperrelements,
- wobei die Transportnutzungsbedingung als Gültigkeitsumfang einer einzelnen durch die Schnittstellenvorrichtung (104, 106, 110, 112, 204, 306) erfassten elektronischen Mediumkennung eine bestimmte Anzahl n_{N} an Nutzern festlegt, und
- das Steuermodul (372) eingerichtet ist zum Bewegen des Sperrelements von der Freigabeposition in die Sperrposition bei einer Detektion einer Anzahl n_{P} von Passagen, die der bestimmten Anzahl n_{N} von Nutzern entspricht.

13. Durchgangssperre (308) nach Anspruch 12, **dadurch gekennzeichnet, dass**
- die Durchgangssperre (308) mindestens einen nach jeder detektierten Passage startbaren Timer (378) umfasst, und
- das Steuermodul (372) eingerichtet ist zum Bewegen des Sperrelements (370) von der Freigabeposition in die Sperrposition bei Ablauf des Timers (378).

14. Personentransportsystem (100), umfassend:
- mindestens ein Hintergrundsystem (102) nach einem der vorherigen Ansprüche 1 bis 5, und
- mindestens eine Schnittstellenvorrichtung (104, 106, 110, 112, 204, 306), insbesondere eine Schnittstellenvorrichtung (104, 106, 110, 112, 204, 306) nach einem der Ansprüche 6 bis 10, insbesondere bevorzugt eine Durchgangssperre nach einem der Ansprüche 11 bis 15,
- wobei die Schnittstellenvorrichtung (104, 106, 110, 112, 204, 306) eingerichtet ist zum Erfassen einer elektronischen Mediumkennung eines Ticketmediums und/oder einer Nutzerkennung zum Identifizieren eines gespeicherten Nutzerdatensatzes,
- wobei die Schnittstellenvorrichtung (104, 106, 110, 112, 204, 306) eingerichtet ist zum Detektieren einer über eine Nutzerschnittstelle (252) der Schnittstellenvorrichtung (104, 106, 110, 112, 204, 306) bestimmten Transportnutzungsbedingung,
- wobei die Schnittstellenvorrichtung (104, 106, 110, 112, 204, 306) eingerichtet ist zum Generieren eines Änderungsdatensatzes, enthaltend zumindest die erfasste elektronische Mediumkennung und/oder Nutzerkennung, die bestimmte Transportnutzungsbedingung und mindestens ein erstes Zeitdatum,
- wobei die Schnittstellenvorrichtung (104, 106, 110, 112, 204, 306) eingerichtet ist zum Senden des generierten Änderungsdatensatzes an das Hintergrundsystem (102).

15. Verfahren zum Betreiben eines Personentransportsystems (100) mit einem Hintergrundsystem (102), insbesondere eines Hintergrundsystems (102) nach einem der vorherigen Ansprüche 1 bis 5, umfassend:
- Speichern mindestens eines Nutzerdatensatzes, enthaltend zumindest eine zum Durchführen einer Transportfahrt berechtigende elektronische Mediumkennung und mindestens eine mit der elektronischen Mediumkennung verknüpfte erste Transportnutzungsbedingung,
- Empfangen eines von einer Schnittstellenvorrichtung (104, 106, 110, 112, 204, 306) des Personentransportsystems (100) generierten Änderungsdatensatzes, enthaltend mindestens eine zweite Transportnutzungsbedingung, mindestens ein erstes Zeitdatum und mindestens eine Nutzerkennung zum Identifizieren eines gespeicherten Nutzerdatensatzes, und
- Ändern der Verknüpfung zwischen der in dem identifizierten Nutzerdatensatz gespeicherten elektronischen Mediumkennung und der ersten Transportnutzungsbedingung für mindestens eine zukünftige Transportfahrt, basierend auf der empfangenen zweiten Transportnutzungsbedingung,
- Rekonstruieren einer durchgeführten Transportfahrt, zumindest basierend auf einem von einer Entwertervorrichtung (104, 106, 204, 306) des Personentransportsystem (100) empfangenen Check-In Datensatz, enthaltend zumindest die elektronische Mediumkennung, und auf einem bereitgestellten Check-Out Datensatz, enthaltend zumindest dieselbe elektronische Mediumkennung, und
- Generieren eines Abrechnungsdatensatzes, zumindest basierend auf der rekonstruierten Transportfahrt und einer mit der elektronischen Mediumkennung verknüpften Transportnutzungsbedingung des Nutzerdatensatzes.
